# EUROPEAN PATENT SPECIFICATION

(11) **EP 4 513 635 B1**
(45) Date of publication and mention of the grant of the patent: **04.02.2026**
(21) Application number: 23193425.8
(22) Date of filing: 25.08.2023
(51) Int. Cl.: H01M 50/103, H01M 50/209, H01M 50/548, H01M 50/569

(54) **BATTERY MODULE USING SIDE-POLE BATTERY CELLS AND ELECTRICAL CONNECTION OF BATTERY CELL TO BATTERY CELL**
BATTERIEMODUL MIT SEITENPOL-BATTERIEZELLEN UND ELEKTRISCHER VERBINDUNG EINER BATTERIEZELLE MIT EINER BATTERIEZELLE
MODULE DE BATTERIE UTILISANT DES ÉLÉMENTS DE BATTERIE À PÔLE LATÉRAL ET CONNEXION ÉLECTRIQUE D'ÉLÉMENT DE BATTERIE À L'ÉLÉMENT DE BATTERIE

(43) Date of publication of application: 26.02.2025
(73) Proprietor: Samsung SDI Co., Ltd., Yongin-si, Gyeonggi-do 17084 (KR)
(72) Inventor: Rath, Helmut, 8481 St. Veit (AT)
(74) Representative: Gulde & Partner

(56) References cited:
- CN-A- 115 621 670
- DE-A1- 102013 201 889
- US-A1- 2017 309 884
- US-A1- 2023 055 300
- US-B2- 9 166 216

## Description

### Field of the Disclosure

The present disclosure relates to a battery module, and in particular to a battery module using side-pole battery cells having an improved connection of adjacent battery cells. The present disclosure further relates to a battery pack including one or more battery modules according to the disclosure. Further, a vehicle using one or more of the battery modules and/or one of more of the battery packs is disclosed. Also, a method for manufacture of the battery module is provided.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used as a power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. The battery modules may comprise submodules with a plurality of stacked battery cells and each stack comprising cells connected in parallel that are connected in series (*XpYs*) or cells connected in series that are connected in parallel (*XsYp*).

A battery pack is a set of any number of (usually identical) battery modules. The battery modules may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

The mechanical integration of such a battery pack requires appropriate mechanical connections between the individual components, e. g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e. g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, the procedure proves burdensome and the storage, e.g. in the mechanic's workshop, of the bulky battery systems becomes difficult.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

DE 10 2013 201889 A1 describes a cell having two battery cell terminals electrically connected with respective electrodes of the cell. One of the battery cell terminals is attached at an outer surface of a battery cell housing and equipped with a spring element, e. g., a cup spring or a helical spring. The spring element is formed and arranged in the cell such that a resilient reversible movement of the battery cell terminal equipped with the spring element is realized with respect to the outer surface of the battery cell housing and opposite to the battery cell housing. An independent claim is also included for a method for manufacturing a battery cell module.

US 2017/309884 A1 relates to a battery including a first power generation element, a first outer cover body which encloses the first power generation element, and a first planar electrode having, as principal surfaces, a first connecting surface and a first protruding surface opposite the first connecting surface. The first connecting surface is electrically connected to the first power generation element. The first outer cover body includes a first covering portion provided with a first opening. The first protruding surface protrudes from the first opening toward an outside of the first covering portion. The first covering portion is joined to at least one of the first planar electrode and the first power generation element.

US 2023/055300 A1 provides a battery pack and a vehicle. The battery pack is fixed to the vehicle and is configured to provide electric energy for the vehicle. The battery pack includes a cell array. The cell array includes at least one cell. The cell includes electrode terminals for leading out current. A first direction is defined as a front-to-rear direction of the vehicle. The electrode terminals are oriented parallel to the first direction.

US 9 166 216 B2 deals with a rechargeable battery, and a module thereof, including a case accommodating an electrode assembly therein; a cap plate covering an opening of the case and having terminal holes; and electrode terminals installed in the terminal holes and electrically connected to the electrode assembly, the electrode terminals being protruded from lateral surfaces of the case adjacent the opening.

CN 115 621 670 A relates to a battery cell structure and a battery pack, wherein the battery cell structure comprises at least two battery cells, each battery cell comprises a positive pole, a negative pole, a battery cell body, a positive pole ear and a negative pole ear, the negative pole of each battery cell and the positive pole of each battery cell are respectively arranged at the left end of the battery cell body and the right end of the battery cell body, the positive pole of each battery cell is connected with the positive pole ear of each battery cell, and the negative pole of each battery cell is connected with the negative pole ear of each battery cell; the positive post of every electric core includes first joint groove and first joint boss, first joint groove and first joint boss dislocation set, and the negative pole post of every electric core includes second joint groove and second joint boss, second joint groove and second joint boss dislocation set, the second joint boss joint of first joint groove and another electric core, the first joint boss joint of second joint groove and another electric core. The method and the device have the advantages of being capable of improving the space utilization rate and improving the energy density.

In conventional commercial electric products with batteries such as fully electrical or hybrid vehicles, these products comprise a battery box with battery cells being clamped together and/or connected together with an aluminum plate which is fusion-welded on the cell-poles. The challenges are in the transfer of higher electrical current and therefor in a solution against the loss of electrical contact. Moreover, clamping and/or welding cell-poles together during the manufacture of a battery is demanding as to both, time and cost.

Accordingly, there is a need for a means that allow for the transfer of higher electrical current in comparison to the state-of-the-art as well as for a solution against the loss of electrical contact between the battery cells of a battery module. Further, there is a need to simplify the manufacture of a battery module and in particular, the establishment of electric connections between the terminals (poles) of individual battery cells.

It is thus an object of the present disclosure to provide a means that allow for the transfer of higher electrical current in comparison to the state-of-the-art as well as for a solution against the loss of electrical contact between the battery cells of a battery module. It is further an object of the present disclosure to provide a vehicle comprising the means. Moreover, it is an object of the present disclosure to provide a method for manufacturing the means, which also simplifies the manufacture process.

### Summary of Invention

The invention is defined by the appended claims. The description that follows is subjected to this limitation. Any disclosure lying outside the scope of the claims is only intended for illustrative as well as comparative purposes.

According to a first aspect of the present disclosure, a battery module is disclosed. The battery module includes at least one battery cell stack having a plurality of battery cells arranged in a row along a stack direction being predefined for that stack. Each of the battery cells includes a casing having a parallelepiped shape with a pair of first lateral sides arranged opposite to each other, a pair of second lateral sides arranged opposite to each other and perpendicular to each of the first lateral sides, a first terminal side perpendicular to each of the first lateral sides and each of the second lateral sides, and a second terminal side perpendicular to each of the first lateral sides and each of the second lateral sides. The first terminal side and the second terminal side are arranged opposite to each other. Each of the first lateral sides has an area larger than the area of each of the second lateral sides and larger than each of the first terminal side and the second terminal side. Each battery cell includes a first terminal arranged on its first terminal side and a second terminal arranged on its second terminal side. In each of the battery cell stacks, when viewing into the stack direction of that battery cell stack, the second terminal side of each battery cell except for the last battery cell faces the first terminal side of a subsequently arranged battery cell. The battery module further includes one or more plate-springs made of an electrically conductive and elastic material. At least in one battery cell stack, at least for one pair of a first terminal side and a second terminal side with the first terminal side of the pair facing the second terminal side of the pair, one of the plate-springs is clamped between the first terminal on the first terminal side of the pair and the second terminal on the second terminal side of the pair.

According to a second aspect of the present disclosure, a battery pack is provided that including one or more battery modules according to the first aspect and/or any one of its embodiments.

A third aspect of the present disclosure refers to a vehicle including at least one battery module according to the first aspect and/or at least one battery system according to the second aspect.

Moreover, a fourth aspect of the present disclosure provides a method for assembling a battery module according to the first aspect, the method including the following steps:
a) providing a plurality of battery cells, each of the battery cells including a casing having parallelepiped shape with a pair of first lateral sides arranged opposite to each other, a pair of second lateral sides arranged opposite to each other and perpendicular to each of the first lateral sides, a first terminal side perpendicular to each of the first lateral sides and each of the second lateral sides, and a second terminal side perpendicular to each of the first lateral sides and each of the second lateral sides, the first terminal side and the second terminal side arranged opposite to each other, wherein each of the first lateral sides has an area larger than the area of each of the second lateral sides and larger than each of the first terminal side and the second terminal side, and each battery cell including a first terminal arranged on the first terminal side and a second terminal arranged on the second terminal side;
b) grouping the battery cells into a plurality of battery cell stacks, each of the stacks including a plurality of battery cells arranged in a row along a stack direction being predefined for that stack, wherein in each of the battery cell stacks, when viewing into the stack direction of that battery cell stack, the second terminal side of each battery cell except for the last battery cell faces the first terminal side of a subsequently arranged battery cell;
c) placing, in at least one battery cell stack, for at least for one pair of a first terminal side and a second terminal side with the first terminal side of the pair facing the second terminal side of the pair, a plate-spring between the first terminal on the first terminal side of the pair and the second terminal on the second terminal side of the pair;
d) pressing each of the battery cell stacks together along their respective stack direction;
f) fixating each of the battery cell stacks, while being pressed together according to step d), in the battery module.

The invention includes, i. a., the following advantages in respect to the state of the art:
- Reducing of number of the complex joining technology fusion-welding on cell-poles
- Reducing of industrialization costs

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic a perspective view of a typical battery cell according to the state-of-the-art.
- Fig. 2: schematically shows a perspective view of a battery cell that may be used in embodiments of a battery module according to the present disclosure.
- Fig. 3: illustrates perspective view schematically showing an example of an electrical cell-to-cell connection between two neighbored battery cells of an embodiment of the battery module according to the present disclosure.
- Fig. 4: shows a schematic explosion-view of an embodiment of the battery module according to the present disclosure.
- Fig. 5: schematically illustrates an example of a plate-spring that may be used in embodiments of the battery module according to the present disclosure.
- Fig. 6: schematically illustrates a cross-sectional through another embodiment of a plate-spring.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e. g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e. g. on a PCB or another kind of circuit carrier. The conducting elements may comprise metallization, e. g. surface metallizations and/or pins, and/or may comprise conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

Generally speaking, the invention based on a new battery cell format / design with side-pole battery cells and their electrical connection together. For compensation of thermal expansion and the attended risk of losing electrical contact from cell-pole to cell-pole, a plate designed as a plate-spring made from an electrically conductive material that can be clamped between the cell-pole surfaces. This part (e. g. designed as a plate-spring) can also be used as contacting surface for a voltage measurement sensing.

According to the first aspect of the present disclosure, a battery module, includes: at least one battery cell stack having a plurality of battery cells arranged in a row along a stack direction being predefined for that stack; each of the battery cells including a casing having a parallelepiped shape with a pair of first lateral sides arranged opposite to each other, a pair of second lateral sides arranged opposite to each other and perpendicular to each of the first lateral sides, a first terminal side perpendicular to each of the first lateral sides and each of the second lateral sides, and a second terminal side perpendicular to each of the first lateral sides and each of the second lateral sides, the first terminal side and the second terminal side arranged opposite to each other, wherein each of the first lateral sides has an area larger than the area of each of the second lateral sides and larger than each of the first terminal side and the second terminal side; each battery cell including a first terminal arranged on its first terminal side and a second terminal arranged on its second terminal side; wherein, in each of the battery cell stacks, when viewing into the stack direction of that battery cell stack, the second terminal side of each battery cell except for the last battery cell faces the first terminal side of a subsequently arranged battery cell; wherein the battery module further includes one or more plate-springs made of an electrically conductive and elastic material; wherein at least in one battery cell stack, at least for one pair of a first terminal side and a second terminal side with the first terminal side of the pair facing the second terminal side of the pair, one of the plate-springs is clamped between the first terminal on the first terminal side of the pair and the second terminal on the second terminal side of the pair.

In the above description of the battery module and in the following, the term "plurality" shall denote "at least two."

In the above description of the battery module and in the following, the term "elastic" shall denote a material property, according to which the material (or more precise: a body made of such material) is not only deformable up to certain degree but also has the capability to resist a distorting influence and to return to its original size and shape when that influence or force is removed. In other words, while any solid object will deform upon applying a sufficiently large load to it, the object will return to its initial shape and size after removal of the load, if the material is elastic. This is in contrast to plasticity; in this case, the object would fail to return into its initial shape after removing the load and thus would remain in its deformed state instead.

Each of the one or more plate-springs may be a leaf-spring or a blade-spring or be referred to as "leaf-spring" or as a "blade-spring."

For each of the battery cells, the first terminal may form the battery cell's positive pole and the second terminal may form the battery cell's negative terminal. Alternatively, for each of the battery cells, the first terminal may form the battery cell's negative pole and the second terminal may form the battery cell's positive terminal.

Thus, in the battery module according to the first aspect, any plate-spring clamped between the terminals of two facing terminal sides of two adjacent battery cells in a battery cell stack connects the two battery cells in series.

In embodiments of the battery module, the casing of all battery cells may be shaped identically.

In alternative embodiments, the first terminal sides of all battery cells are congruent and the second terminal sides of all battery cells are congruent, while the area of the first lateral sides may vary amongst the battery cells and/or the area of the second lateral sides may vary amongst the battery cells.

In embodiments of the battery module, the casings of all battery cells have a rectangular-parallelepiped shape. In other words, according to such embodiments, any two abutting side faces of an arbitrary casing used in the battery module are arranged perpendicular to each other.

In embodiments of the battery module according to the first aspect, for any battery cell stack included in the battery module, there is at least one pair of a first terminal side and a second terminal side, the first terminal side belonging to a battery cell of that battery cell stack and the second terminal side belonging to an adjacent battery cell of that battery cell stack, wherein the first terminal side of the pair faces the second terminal side of the pair, and one of the plate-springs is clamped between the first terminal on the first terminal side of the pair and the second terminal on the second terminal side of the pair.

In an embodiment of the battery module, for each pair of a first terminal side and a second terminal side with the first terminal side of the pair facing the second terminal side of the pair, one of the plate-springs is clamped between the first terminal on the first terminal side of the pair and the second terminal on the second terminal side of the pair.

In such embodiments, each pair of adjacent battery cells is connected in series by a plate-spring. Thus, one can say that in such embodiments, in each of the battery cell stacks. all the battery cells of that stack are connected in series by means of the plate-springs.

In an embodiment of the battery module, at least some of the plate-springs arranged between a first terminal of a first terminal side and a second terminal of a second terminal side with the first terminal side facing the second terminal side are pre-compressed with regard to the stack direction of the battery cell stack including the respective plate-spring.

When a plate-spring is pre-compressed between the first and second terminals of a pair of a first terminal side and a second terminal side facing each other, a widening of the interstice or gap between the first and second terminal side can be compensated for by the plate-spring inserted therebetween up to a certain level, as the plate-spring would extend, along the direction of the battery cell stack, in order to return to its (original) uncompressed state.

In embodiments of the battery module, for each of the battery cell stacks, there is at least one pair of neighbored battery cells included in that stack, wherein for the pair of facing terminal sides of that pair of battery cells, a plate-spring is arranged and pre-compressed between the first terminal on the first terminal side of that pair of terminal sides and the second terminal on the second terminal side of that pair of terminal sides. Thereby, each of pre-compressed plate-springs is pre-compressed with regard to the stack direction of the respective battery cell stack that includes that plate-spring.

In an embodiment of the battery module, the battery module includes at least one group of battery cell stacks; each group of battery cell stacks includes a plurality of battery cell stacks; the battery module further includes one or more separation-plates; for each group, the stack directions of each battery cell stack of that group are parallel or antiparallel to each other; for each group, the battery cell stacks of that group are arranged next to each other on a virtual plane along a direction perpendicular to the stack direction of the battery cell stacks of that group; and for each group, between any two neighbored battery cell stacks, a separation-plate is arranged.

In other words, for each group of battery cell stacks arranged side by side and parallel or antiparallel to each other on a virtual plane, the battery cell stacks are themselves stacked, in a direction perpendicular to their stack direction, alternately with the separation-plates.

In this context, the term "parallel" with regard to any two directions shall denote that an angle between those two directions is 0°. Note that an angle between two straight (and orientated) lines can always be defined, even when these lines are not intersecting or touching each other. Further, the term "anti-parallel" with regard to any two directions shall denote that an angle between those two directions is 180°.

In embodiments, the battery module may comprise only a single group of battery cell stacks, wherein, however, this group of battery cell stacks includes all battery cell stacks included in the battery module.

In alternative embodiments, the battery module may comprise several groups of battery cells stacks, these groups of battery cells stacks being arranged next to each other.

In an embodiment of the battery module, at least one separation-plate is a structural part of the battery module.

The term "structural part" with respect to a certain member of the battery module shall in particular denote in this context that the member provides mechanical stability to the battery module and/or holds other members, which are fixed to that member, in place.

In an embodiment of the battery module, at least one separation-plate is made of an electrically insulating material.

In some embodiments, each of the separation-plates is made of an electrically insulating material.

In an embodiment of the battery module, at least one separation-plate is made of a thermally insulating material.

In some embodiments, each of the separation-plates is made of a thermally insulating material.

In an embodiment of the battery module, for any pre-compressed plate-spring, the two battery cells adjacent to that plate-spring with regard to the stack direction of the battery cell stack including the adjacent battery cells are adhered to at least one neighbored separation-plate.

In embodiments, all of the battery cells are adhered to at least one separation-plate.

In some embodiments, each battery cells are adhered to each of the separation-plates adjacent to that battery cell.

In an embodiment, the battery module includes at least two battery cell stacks. For each of these battery cell stacks, when viewing into the stack direction of that battery cell stack, a first battery cell stack terminal is formed by the first terminal of the first battery cell arranged in that battery cell stack and a second battery cell stack terminal is formed by the second terminal of the last battery cell arranged in that battery cell stack. Further, the battery module further includes at least one connection-plate; each of the connection-plates electrically connects a group of at least two battery cell stacks in that for each battery cell stack of that group of at least two battery cell stacks, either the first battery cell stack terminal or the second battery cell stack terminal is fixated to that connection-plate.

In embodiments, the fixation of at least one connection-plate to at least one battery cell stack terminal may be realized by welding, e. g., fusion-welding. In embodiments, the fixation of at least one connection-plate to at least one battery cell stack terminal may be realized by using a nut. In any case, the fixation allows for an electrical connection between the connection-plate and the terminal to which the connection-plate is connected.

In embodiments, the individual battery cell stacks included in the battery module may be electrically connected in series. In such embodiments, each connection-plate connects only two battery cell stacks with each other in that this connection-plate is fixated to the second battery cell stack terminal of one of the battery cell stacks and also fixated to the first battery cell stack terminal of another one of the battery cell stacks. Then, if the battery module includes altogether N battery cell stacks, N - 1 connection-plate are required to connect the N battery cells stacks in series.

In alternative embodiments, the individual battery cell stacks included in the battery module may be electrically connected in parallel. In such embodiments, two connection-plates are required, i. e., a first connection-plate and a second connection-plate. Thereby, the first connection-plate may be fixated to the first battery cell stack terminals of each of the battery cell stacks, and the second connection-plate may be fixated to the second battery cell stack terminals of each of the battery cell stacks.

In an embodiment of the battery module, at least one of the plate-springs is formed as an essentially planar plate or essentially planar disc with at least one indentation.

In embodiments, the area of each of the indentations of the plate or disc of a plate-spring may be smaller than the area of the first and/or second terminals of the battery cells, between which the plate-spring is clamped.

In embodiments, all plate-springs are formed as an essentially planar plate or essentially planar disc with at least one indentation.

In an embodiment of the battery module, at least one of the plate-springs is made of aluminum or copper.

In embodiments, all plate-springs are made of aluminum, or all plate-springs are made of copper.

According to the second aspect of the present disclosure, a battery pack includes one or more battery modules according to the first aspect.

In an embodiment, the battery pack further includes a voltage measurement circuit; wherein the voltage measurement circuit includes at least one electric line; and wherein at least one of the plate-springs is electrically connected to an electric line.

Then, when measuring (e. g., by a voltmeter) the electrical potential difference between the electric potential of an electric line connected of the voltage measurement circuit to a certain plate-spring and a reference potential (e. g., the electric potential of another electric line of the voltage measurement circuit or of one of the first and second battery cell stack terminals of one of the battery cell stacks) can be monitored.

In embodiments of the battery pack, each of the plate-springs may be electrically connected to an electric line of the voltage measurement circuit. In embodiments, additionally or alternatively, the voltage measurement circuit may also comprise further electric lines, wherein each of the first and second battery cell stack terminals are electrically connected with one of these further electric lines.

This allows for a close-meshed monitoring of the voltage state of individual battery cells comprised in the stack, as the voltage (i. e., the electrical potential difference) can then be measured between the first and the second terminal of an individual battery cell.

In embodiments, the ends of the electric lines of the voltage measurement circuit may be bundled in a plug or socket. This allows for a simple connection of the measurement circuit with an (external) device for monitoring the voltage state of the battery pack and/or its battery cells. The device for monitoring the voltage state may be a BMU or BMS or integrated in a BMU or BMS.

In embodiments, the battery pack may further include a device for monitoring the voltage state of the battery pack and/or its battery cells.

Further, the battery pack according to the second aspect of the disclosure or any of its embodiments may be included in a battery system, wherein the battery system includes a device for monitoring the voltage state of the battery pack and/or its battery cells. In some embodiments of such a battery system, the device for monitoring the voltage state is a BMU or BMS or integrated in a BMU or BMS.

According to a third aspect of the present disclosure, a vehicle includes at least one battery module according to the first aspect and/or at least one battery system according to the second aspect.

The vehicle may be a hybrid vehicle or a fully electric vehicle.

The fourth aspect of the present disclosure relates to a method for assembling a battery module according to the first aspect, the method including the following steps:
a) providing a plurality of battery cells, each of the battery cells including a casing having parallelepiped shape with a pair of first lateral sides arranged opposite to each other, a pair of second lateral sides arranged opposite to each other and perpendicular to each of the first lateral sides, a first terminal side perpendicular to each of the first lateral sides and each of the second lateral sides, and a second terminal side perpendicular to each of the first lateral sides and each of the second lateral sides, the first terminal side and the second terminal side arranged opposite to each other, wherein each of the first lateral sides has an area larger than the area of each of the second lateral sides and larger than each of the first terminal side and the second terminal side, and each battery cell including a first terminal arranged on the first terminal side and a second terminal arranged on the second terminal side;
b) grouping the battery cells into a plurality of battery cell stacks, each of the stacks including a plurality of battery cells arranged in a row along a stack direction being predefined for that stack, wherein in each of the battery cell stacks, when viewing into the stack direction of that battery cell stack, the second terminal side of each battery cell except for the last battery cell faces the first terminal side of a subsequently arranged battery cell;
c) placing, in at least one battery cell stack, for at least for one pair of a first terminal side and a second terminal side with the first terminal side of the pair facing the second terminal side of the pair, a plate-spring between the first terminal on the first terminal side of the pair and the second terminal on the second terminal side of the pair;
d) pressing each of the battery cell stacks together along their respective stack direction;
f) fixating each of the battery cell stacks, while being pressed together according to step d), in the battery module.

In some embodiments of the method, step c) includes placing, in all battery cell stacks, for at least for one pair of a first terminal side and a second terminal side with the first terminal side of the pair facing the second terminal side of the pair, a plate-spring between the first terminal on the first terminal side of the pair and the second terminal on the second terminal side of the pair.

In more some embodiments of the method, step c) includes placing, in all battery cell stacks, for each of the pairs of a first terminal side and a second terminal side with the first terminal side of the pair facing the second terminal side of the pair, a plate-spring between the first terminal on the first terminal side of the pair and the second terminal on the second terminal side of the pair.

In some embodiments of the method, step d) includes pre-compressing the at least one plate-spring.

In embodiments of the method, step f) includes arranging the battery cell stacks subsequently to one another on a virtual plane, wherein the battery cell stacks are arranged subsequently to one another with regard to a predefined direction perpendicular to each of the stack directions. Step f) may further comprise, when viewing into the predefined direction, placing a first carrier in front of the first battery cell stack such that the first carrier abuts against the first battery cell stack. Step f) may also comprise, when viewing into the predefined direction, placing a second carrier behind the last battery cell stack such that the second carrier abuts against the last battery cell stack. Also, between any two neighbored battery cell stacks, a separation-plate may be placed.

In embodiments of the method, step f) includes adhering some or each of the battery cells, with at least one of their respective first lateral sides, to one of the first carrier or the second carrier and/or to one of the separation-plates.

As can be seen from the description above, embodiments of the method comprise the issue to press the battery cells together on the cell-pole surface and fix the battery cells in this position.

### Specific Embodiments

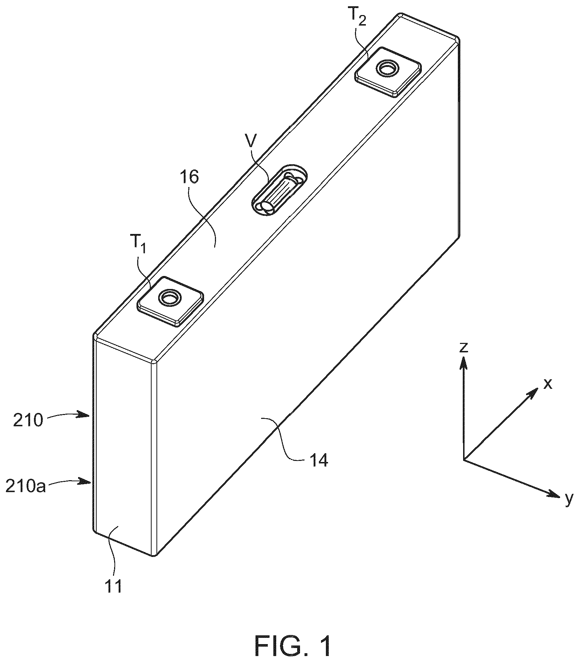

Figure 1 provides a perspective view illustrating a typical design of a state-of-the-art battery cell 210 used, e. g., in a battery module for an electric or hybrid vehicle. To facilitate the following description, a Cartesian coordinate system with axes x, y, and z is also depicted in Fig. 1. The illustrated battery cell 210 has a prismatic (parallelepiped) shape essentially defined by a casing 210a. For example, the casing 210a is built by a can including six essentially planar outer side faces. The can includes a pair of congruent first lateral sides (of that pair, only the side 14 facing into the y-direction is shown in Fig. 1) arranged opposite to each other, each of the first lateral sides being perpendicular to the y-axis. Also, the casing 210a includes a pair of congruent second lateral sides (of this pair, only the side 16 facing into the z-direction is shown) arranged opposite to each other, each of the second lateral sides being perpendicular to the z-axis. Finally, the casing 210a includes a pair of congruent third lateral sides (of this pair, only the side 11 facing against the x-direction is shown) arranged opposite to each other, each of the third lateral sides being perpendicular to the x-axis. In the illustrated example, the first lateral sides have the largest areas compared to the remaining side faces of the casing 210a.

The pair of second lateral sides includes a lower side (not shown) facing against the z-direction and an upper side 16 facing into the z-direction. On the upper side 16 of the casing 210a, a first terminal T₁ and a second terminal T₂ are arranged. The terminals T₁, T₂ allow for an electrical connection of the battery cell 210. The first terminal T₁ may be the positive terminal (positive pole) of the battery cell 210, and the second terminal T₂ may be the negative terminal (negative pole) of the battery cell 210. Furthermore, between the first terminal T₁ and the second terminal T₂, a venting outlet V is arranged on the upper side 16. Accordingly, the upper side 16 will in the following be referred to as the "venting side" of battery cell 210 or its casing 210a.

Through the venting outlet V, vent gas can be ejected from the battery cell 210 in case of a thermal event occurring within the battery cell 210 such as a thermal runaway. Inside the battery cell 210, a valve (not shown) is usually installed upstream of the venting outlet V, the valve being configured to open, if the gas pressure inside the battery cell 210 exceeds a predefined value, and to remain in a closed stated otherwise, i. e., when the gas pressure inside the battery cell 210 is below the predefined value. Thus, before being output via the venting outlet V, the vent gas may pass the venting valve arranged inside the battery cell 210.

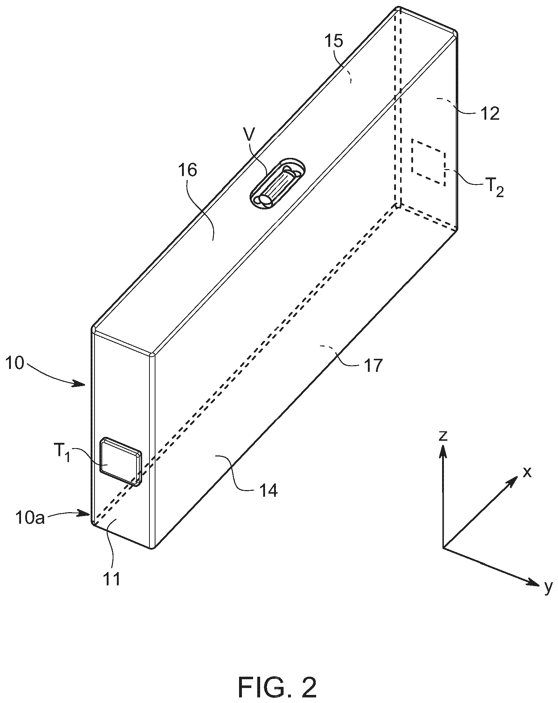

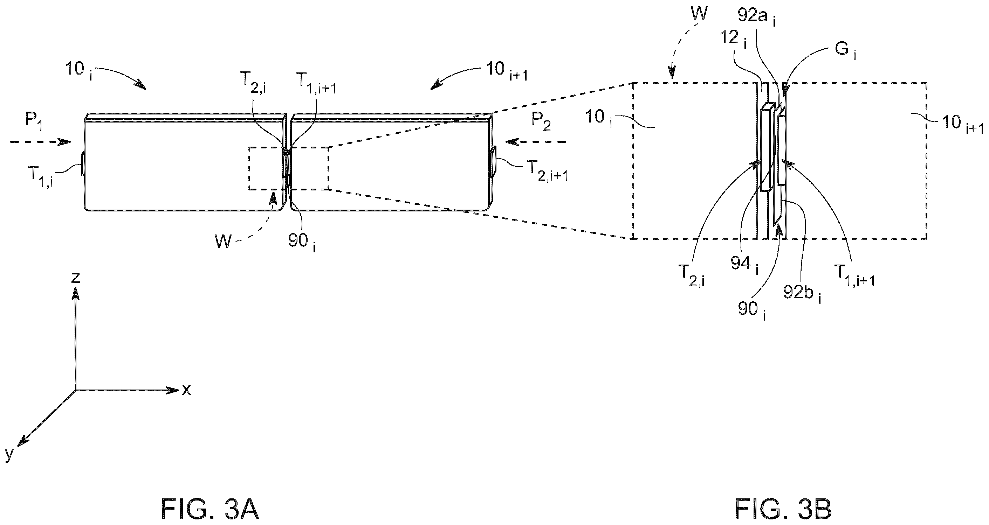

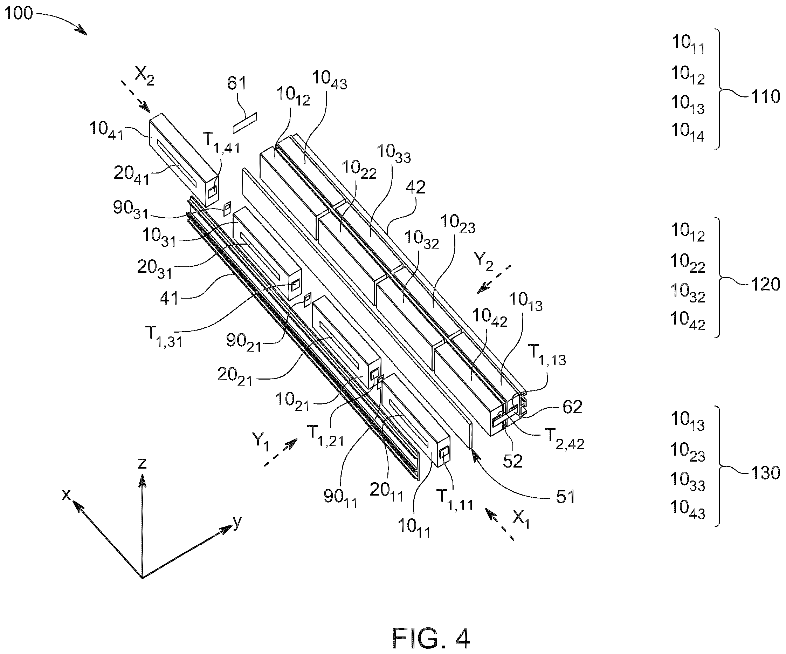

Figure 2 schematically shows a perspective view of a battery cell 10 that may be used in embodiments of a battery module 100 (see Fig. 4) according to the present disclosure. The battery cell 10 includes a casing 10a similar to the casing 210a of the battery cell 210 described above with reference to Fig. 1. Thus, except for the locations of the terminals T₁, T₂, the structure and functioning of the battery cell 10 depicted in Fig. 3 corresponds to that explained above in the context of Fig. 1. However, in contrast to the battery cell 210 illustrated in Fig. 1, the battery cell 10 shown in Fig. 2 includes first and second terminals T₁, T₂ being arranged on the third lateral sides 11, 12 (i. e., the side faces perpendicular to the x-direction in Fig. 2) of the casing 10a instead of being arranged on the second lateral sides 16, 17 (i. e., the side faces perpendicular to the z-direction). For example, the first terminal T₁ is arranged on a first terminal side 11 of the casing 10a, the first terminal side 11 facing against the x-direction, and the second terminal T₂ is arranged on that a second terminal side 12 of the casing 10a, which faces into the x-direction (i. e., on the side opposite to the first terminal side 11).

Note that in this battery cell format, the first lateral sides 14,15 have the largest areas compared to the remaining side faces 11,12,16,17 of the casing 10a, and the third lateral sides 11,12 (with the terminals being T₁, T₂ installed thereon) have the smallest areas compared to the remaining side faces 14,15,16,17 of the casing 10a. Hence, throughout the present disclosure, a battery cell format similar to that shown in Fig. 3 may be referred to as "side-pole battery cell." Also, the side 11 facing against the x-direction will be referred to as the "first terminal side" and the opposite side 12, which faces into the x-direction, will be referred to as the "second terminal side."

In embodiments of the side-pole battery cell 10, the second terminal T₂ may have a shape identical to the mirrored shape of the first terminal T₁, the mirroring taken with respect to the y-z-plane of the coordinate system. In other embodiments, the second terminal T₂ may have a shape different from the shape of the first terminal T₁. However, in some embodiments, each of the first terminal T₁ and the second terminal T₂ exhibits a flat shape extending in a region of a plane parallel to the y-z-plane. The first terminal T₁ and/or the second terminal T₂, may have, when seen along the x-direction, a rectangular shape, e. g., a square shape.

In embodiments of the side-pole battery cell 10, the battery cell 10 has an outer appearance being symmetrical with regard to mirroring the battery cell 10 on a first virtual plane parallel to the y-z-plane of the coordinate system (with the first virtual plane being positioned, with regard to the x-direction, in the center between the first terminal side 11 and the second terminal side 12. Also, the outer appearance of the battery cell 10 may be symmetrical with regard to mirroring the battery cell 10 on a second virtual plane parallel to the x-z-plane (with the second virtual plane being positioned, with regard to the y-direction, in the center between the pair of first lateral sides), and/or may be symmetrical, except for the venting outlet V, with regard to mirroring the battery cell 10 on a third virtual plane parallel to the x-y-plane m (with the third virtual plane being positioned, with regard to the z-direction, in the center between the pair of second lateral sides).

Figure 3 is a perspective view schematically showing an example of an electrical cell-to-cell connection between two neighbored battery cells 10ᵢ and 10ᵢ₊₁ of a battery stack via a plate-spring 90ᵢ as may be realized in embodiments of the battery module according to the present disclosure. Fig. 3B provides an enlarged view of the cut-out W of Fig. 3A. For example, Fig. 3 illustrates a cell-to-cell connection using a "plate-spring," which compensates for compression forces and thermal expansion.

As can be taken from Fig. 3A, an i-th battery cell 10ᵢ, and an (i+1)-th battery cell 10ᵢ₊₁ are stacked along the x-direction such that the second terminal side 12ᵢ of the i-th battery cell 10ᵢ faces the first battery side (not visible in Fig. 3A) of the adjacent (i+1)-th battery cell 10ᵢ₊₁. It is understood that the stack of battery cells may include further battery cells (not shown) being arranged, when viewing in the direction of the x-axis of the coordinate system, before the i-th battery cell 10ᵢ as well as after the (i+1)-th battery cell 10ᵢ₊₁ in a corresponding manner. Hence, when the stack of battery cells contains a total number of N battery cells (with N being an integer number with N ≥ 2), the shown pair of neighbored battery cells may be any pair of subsequent battery cells in that stack, i. e., the index i may be any number with i ∈ {1, ..., N - 1}. Specifically, the stack of battery cells may include N battery cells arranged in a row along a certain direction. In Fig. 3A, the individual battery cells are stacked in the direction of the x-axis of the of the coordinate system. Thus, the x-direction may also be referred to as the "stack direction" in the context of Fig. 3. Note, that for any one of the i-th battery cell 10ᵢ and the (i+1)-th battery cell 10ᵢ₊₁, each of the terminal sides (i. e., the side faces of the battery cells 10ᵢ, 10ᵢ₊₁ arranged perpendicular to the x-axis in Fig. 3) has an area smaller than each of the first lateral sides (i. e., the side faces of the battery cells 10ᵢ, 10ᵢ₊₁ arranged perpendicular to the y-axis) and each of the second lateral sides (i. e., the side faces of the battery cells 10ᵢ, 10ᵢ₊₁ arranged perpendicular to the y-axis). Also, the i-th battery cell 10ᵢ and the (i+1)-th battery cell 10ᵢ₊₁ are shaped identically in the shown example.

As can be further seen in Fig. 3A, a second terminal T_{2,i} of the i-th battery cell 10ᵢ is arranged on the second terminal side 12ᵢ of the i-th battery cell 10ᵢ Similarly, a first terminal T_{1,i+1} of the (i+1)-th battery cell 10ᵢ₊₁ is arranged on the first terminal side (not visible in Fig. 3A) of the (i+1)-th battery cell 10ᵢ₊₁. For example, each of the i-th battery cell 10ᵢ and the (i+1)-th battery cell 10ᵢ₊₁ is a "side-pole battery cell," i. e., it has a battery cell format similar to that of the battery cell illustrated in Fig. 2. Note that in Fig. 3, the first index (specifying the terminal of a certain battery cell) and the second index (specifying the battery cell in the stack according to the order along the stack direction) are separated in the reference signs of the terminals by a comma to avoid misinterpretation, e.g., a confusion with multiplication.

In the shown embodiment, there is an interstice or a gap Gᵢ between the second terminal side 12ᵢ of the i-th battery cell 10ᵢ and the first terminal side (not visible) of the (i+1)-th battery cell 10ᵢ₊₁ with regard to the stack direction (x-direction). The second terminal T_{2,i} and the first terminal T_{1,i+1} are each protruding, from opposite directions, into this interstice or gap Gᵢ.

With reference to Fig. 3, the second terminal T_{2,i} may be the negative terminal (i. e., the electrically negative pole) of the i-th battery cell 10ᵢ, and the first terminal T_{1,i+1} may be the positive terminal (i. e., the electrically positive pole) of the (i+1)-th battery cell 10ᵢ₊₁. More generally speaking, when the battery cell stack including the shown battery cells 10ᵢ, 10ᵢ₊₁ contains more battery cells than the depicted battery cells 10ᵢ and 10ᵢ₊₁, the second terminals (i. e., each of the terminals facing into the x-direction) of each of the battery cells may be negative terminals, and the first terminals (i. e., each of the terminals facing against the x-direction) of each of the battery cells may be positive terminals.

However, in alternative embodiments, the second terminal T_{2,i} may be the positive terminal (i. e., the electrically positive pole) of the i-th battery cell 10ᵢ, and the first terminal T_{1,i+1} may be the negative terminal (i. e., the electrically negative pole) of the (i+1)-th battery cell 10ᵢ₊₁. More generally speaking, in such embodiments, when the battery cell stack including the shown battery cells 10ᵢ, 10ᵢ₊₁ contains more battery cells than the depicted battery cells 10ᵢ and 10ᵢ₊₁, the second terminals (i. e., each of the terminals facing into the x-direction) of each of the battery cells may be positive terminals, and the first terminals (i. e., each of the terminals facing against the x-direction) of each of the battery cells may be negative terminals.

Both, the second terminal T_{2,i} of the i-th battery cell 10ᵢ and the first terminal T_{1,i+1} of the (i+1)-th battery cell 10ᵢ₊₁, are shaped as flat rectangular regions extending parallel to the respective terminal sides, on which they are arranged. Moreover, the second terminal T_{2,i} of the i-th battery cell 10ᵢ and the first terminal T_{1,i+1} of the (i+1)-th battery cell 10ᵢ₊₁ are arranged such on their respective terminal sides that the second terminal T_{2,i} of the i-th battery cell 10ᵢ and the first terminal T_{1,i+1} of the (i+1)-th battery cell 10ᵢ₊₁ are located opposite to each other with respect to the interstice or gap Gᵢ between the shown battery cells.

According to the above-described arrangement of the terminals, a plate-spring 90ᵢ can be clamped or sandwiched between the second terminal T_{2,i} of the i-th battery cell 10ᵢ and the first terminal T_{1,i+1} of the (i+1)-th battery cell 10ᵢ₊₁, as can be best seen in Fig. 3B showing an enlarged view of the region around the terminals T_{1,i+1} and T_{2,i}. The plate-spring 90ᵢ is made of an elastic and electrically conductive material. For example, the plate-spring 90ᵢ may be made of aluminum or copper. Hence, when the plate-spring 90i is clamped or sandwiched between the two terminals T_{1,i+1} and T_{2,i} and is thus in mechanical contact with each of the terminals T_{1,i+1} and T_{2,i}, the second terminal T_{2,i} of the i-th battery cell 10ᵢ is electrically connected to the first terminal T_{1,i+1} of the (i+1)-th battery cell 10ᵢ₊₁ by means of the plate-spring 90ᵢ.

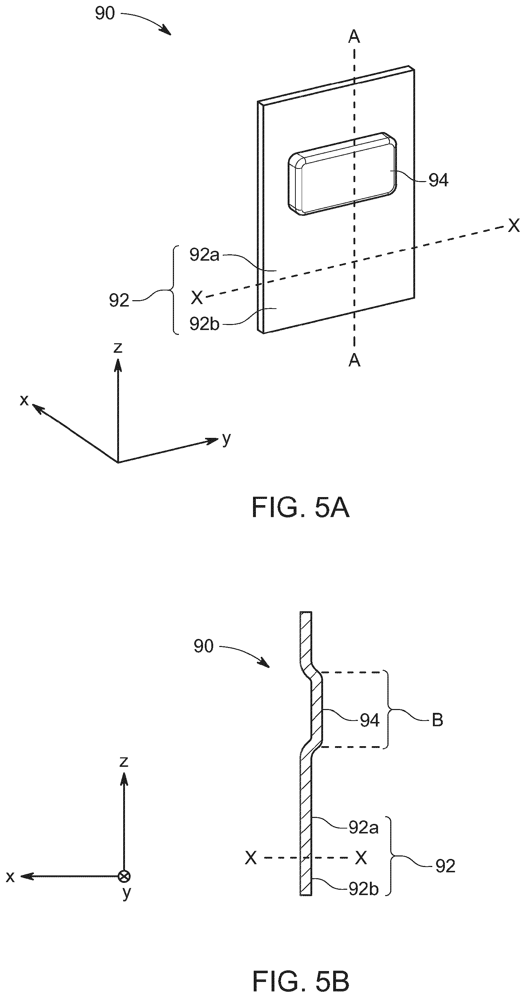

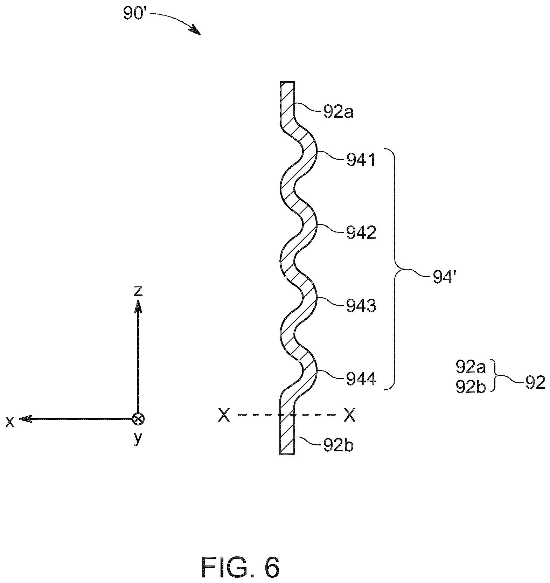

The plate-spring 90ᵢ has an essentially planar shape, which includes, however, one or more regions 94ᵢ protruding into and/or against the normal direction (i. e., the direction perpendicular) with regard to the virtual plane, along which the essentially planar shape of the plate-spring 90ᵢ extends. For example, the plate-spring 90ᵢ is configured for being placed such between the second terminal T_{2,i} of the i-th battery cell 10ᵢ and the first terminal T_{1,i+1} of the (i+1)-th battery cell 10ᵢ₊₁ that the essentially planar shape of the plate-spring 90ᵢ is arranged in parallel to the terminals. Examples of shapes of plate-springs that may be used as the plate-spring 90ᵢ depicted in Fig. 3 will be described in more detail below with reference to Figs. 5 and 6. In any case, the plate-spring 90ᵢ is configured for being compressed (i. e., deformed) when being arranged between the second terminal T_{2,i} of the i-th battery cell 10ᵢ and the first terminal T_{1,i+1} of the (i+1)-th battery cell 10ᵢ₊₁, when these two terminals are pressed towards each other using a sufficiently large force. In other words, the plate-spring 90ᵢ is brought into a compressed state due to the forces acting on the plate-spring 90ᵢ by means of the two terminals. On the other hand, due to the elasticity of the plate-spring's 90ᵢ material (see above), the plate-spring 90ᵢ tries to return into its original shape (i. e., the shape of the plate-spring 90ᵢ not being subjected to a load) and thus exerts force on each of the two terminals in order to press the two members away from each other.

Thus, when the interstice or gap Gᵢ between the opposite terminal sides of the shown battery cells 10ᵢ, 10ᵢ₊₁ decreases (e. g., due to thermal expansion of the battery cells 10ᵢ, 10ᵢ₊₁ or due to mechanical impact), the plate-spring 90ᵢ will be compressed between the second terminal T_{2,i} of the i-th battery cell 10ᵢ and the first terminal T_{1,i+1} of the (i+1)-th battery cell 10ᵢ₊₁ (or, if the plate-spring 90ᵢ is already pre-compressed, will be brought into a more compressed state). Hence, the plate-spring 90ᵢ ensures the electrical connection between the second terminal T_{2,i} of the i-th battery cell 10ᵢ and the first terminal T_{1,i+1} of the (i+1)-th battery cell 10ᵢ₊₁, even when the interstice or gap Gᵢ may be decreased or temporarily decreased in comparison to a pre-defined optimal distance or nominal distance between the opposite terminal sides of the shown battery cells 10ᵢ, 10ᵢ₊₁. The pre-defined optimal distance or nominal distance may be the distance between the second terminal side 12ᵢ of the i-th battery cell 10ᵢ and the first terminal side of the (i+1)-th battery cell 10ᵢ₊₁, when the correctly working battery module drives a pre-defined electrical load, while being positioned in an environment having a pre-defined temperature. Alternatively, the pre-defined optimal distance or nominal distance may be the distance between the second terminal side 12ᵢ of the i-th battery cell 10ᵢ and the first terminal side of the (i+1)-th battery cell 10ᵢ₊₁, when the battery module does not work, while again being positioned in an environment having a pre-defined temperature.

In embodiments of the battery module according to the present disclosure, the battery cell 90ᵢ is in a pre-compressed state, when the distance between the second terminal side 12ᵢ of the i-th battery cell 10ᵢ and the first terminal side of the (i+1)-th battery cell 10ᵢ₊₁ is a pre-defined optimal distance or nominal distance as described above. This is indicated in Fig. 3A by the two arrows P₁ and P₂ that shall symbolize (oppositely directed) forces acting on the i-th battery cell 10ᵢ and the (i+1)-th battery cell 10ᵢ₊₁, respectively, so as to push these battery cells towards each other. Transferred through the (rigid) casings of the battery cells 10ᵢ, 10ᵢ₊₁, the same forces then act on the terminals T_{1,i+1} and T_{2,i}, thereby pre-compressing the plate-spring 90ᵢ between the terminals T_{1,i+1} and T_{2,i}. It is understood that this may apply correspondingly for other spring-plates (not shown) arranged between the terminals of further pairs of neighbored battery cells of the battery cell stack that includes the shown battery cells 10ᵢ and 10ᵢ₊₁. The battery cell stack may then be implemented, during manufacture of embodiments of a battery module according to the disclosure, into the battery module such that one or more pre-compressed spring-plates are then arranged between respective pairs of (the opposite terminals of) adjacent battery cells of that stack.

Thus, in such embodiments, when the interstice or gap Gᵢ between the opposite terminal sides of the shown battery cells 10ᵢ, 10ᵢ₊₁ decreases (e. g., due to thermal expansion of the battery cells 10ᵢ, 10ᵢ₊₁ or due to mechanical impact), the plate-spring 90ᵢ will be even more compressed between the second terminal T_{2,i} of the i-th battery cell 10ᵢ and the first terminal T_{1,i+1} of the (i+1)-th battery cell 10ᵢ₊₁. Hence, the plate-spring 90ᵢ ensures the electrical connection between the second terminal T_{2,i} of the i-th battery cell 10ᵢ and the first terminal T_{1,i+1} of the (i+1)-th battery cell 10ᵢ₊₁, even when the interstice or gap Gᵢ may be decreased or temporarily decreased in comparison to a pre-defined optimal distance or nominal distance between the opposite terminal sides of the shown battery cells 10ᵢ, 10ᵢ₊₁. On the other hand, when the interstice or gap Gᵢ between the opposite terminal sides of the shown battery cells 10ᵢ, 10ᵢ₊₁ increases (e. g., due to a decrease of the thermal expansion of the battery cells 10ᵢ, 10ᵢ₊₁ caused by a cooling of the battery cells or due to mechanical impact), the plate-spring 90ᵢ will expand between the second terminal T_{2,i} of the i-th battery cell 10ᵢ and the first terminal T_{1,i+1} of the (i+1)-th battery cell 10ᵢ₊₁ and thus remain in mechanical contact with the second terminal T_{2,i} of the i-th battery cell 10ᵢ and the first terminal T_{1,i+1} of the (i+1)-th battery cell 10ᵢ₊₁ (as long as the distance between the second terminal T_{2,i} of the i-th battery cell 10ᵢ and the first terminal T_{1,i+1} of the (i+1)-th battery cell 10ᵢ₊₁ does not become larger than the extension of the plate-spring 90ᵢ in the x-direction when being in its uncompressed state, i. e., without being subjected to any mechanical load). Hence, the plate-spring 90ᵢ ensures the electrical connection between the second terminal T_{2,i} of the i-th battery cell 10ᵢ and the first terminal T_{1,i+1} of the (i+1)-th battery cell 10ᵢ₊₁, even when the interstice or gap Gᵢ may be increased or temporarily increased in comparison to a pre-defined optimal distance or nominal distance between the opposite terminal sides of the shown battery cells 10ᵢ, 10ᵢ₊₁.

As will be described in more detail below with reference to Figs. 5 and 6, the plate-spring 90ᵢ may comprise a portion configured for protruding between the terminals, when the plate-spring 90ᵢ is sandwiched or clamped between the second terminal T_{2,i} of the i-th battery cell 10ᵢ and the first terminal T_{1,i+1} of the (i+1)-th battery cell 10ᵢ₊₁. In the example illustrated in Fig. 3, a first portion 92aᵢ of the plate-spring 90ᵢ is sandwiched or clamped between the second terminal T_{2,i} of the i-th battery cell 10ᵢ and the first terminal T_{1,i+1} of the (i+1)-th battery cell 10ᵢ₊₁, while a second portion 92bᵢ of the plate-spring 90ᵢ protrudes downwards (with regard to the z-axis) from between the two afore-mentioned terminals. The second portion 92ᵢ may be configured for serving as a connector for an electric line or conduit (not shown). Then, a voltage can be measured between the plate-spring 90ᵢ and an electric reference potential (e. g., the electric potential of another plate-spring arranged between another pair of battery cells or the electric potential of one of the first and second battery cell stack terminals of one of the battery cell stacks).

The measurement can be performed using a voltmeter (connected, via an electric line with the second portion 92bᵢ of the plate spring 90ᵢ as well as electrically connected to a reference potential) that may be integrated in the battery module according to the present disclosure or provided as an external device. The measured voltage can be monitored by a suitable monitoring device such as a BMU or a BMS. Also, when tapping a voltage between the plate-spring 90ᵢ and another electric potential (e. g., first terminal of the first battery cell arranged in the battery cell stack including the shown pair of battery cells 10ᵢ, 10ᵢ₊₁ or the first terminal of predefined battery cell of the whole battery module, e. g., the first terminal T_{1,11} of the first battery cell 10₁₁ of the battery module 100 shown in Fig. 4), voltages different from the battery module's maximum voltage can be provided.

Figure 4 provides a schematic explosion-view of an embodiment of a battery module 100 according to the present disclosure. The battery module 100 includes three battery cell stacks 110, 120, 130, each of which including a row of four individual battery cells arranged subsequently to each other in parallel or anti-parallel to the x-direction of the coordinate system.

For example, the first battery cell stack 110 includes a first battery cell 10₁₁, a second battery cell 10₂₁, a third battery cell 10₃₁, and a fourth battery cell 10₄₁ being arranged, in the order of their mentioning before, in the direction of the x-axis. Each of the individual battery cells 10₁₁, 10₂₁, 10₃₁, and 10₄₁ is designed as a "side-pole battery cell" similar to that described above with reference to Fig. 2. Each of the battery cells 10₁₁, 10₂₁, 10₃₁, and 10₄₁ is orientated such that its first terminal side (with its first terminal T_{1,11}, T_{1,21}, T_{1,31}, T_{1,41} arranged thereon) faces against the x-direction, and its second terminal side (with its second terminal arranged thereon; the second terminals of the battery cells of the first battery cell stack 110 not visible in Fig. 4) faces into the x-direction. Accordingly, the battery cells 10₁₁, 10₂₁, 10₃₁, and 10₄₁ are stacked such that for any pair of neighbored battery cells, the second terminal of one of these neighbored battery cells (viz. the battery cell arranged before the other battery cell of this pair when viewing into the x-direction) is arranged opposite to and faces the first terminal of the other battery cell of this pair. However, for any pair of neighbored battery cells, a plate-spring is arranged between their facing pair of terminals, as already described above with reference to Fig. 3. Referring to Fig. 4, a first plate-spring 90₁₁ is arranged between the second terminal (not shown) of the first battery cell 10₁₁ and the first terminal T_{1,21} of the second battery cell 10₂₁. Similarly, a second plate-spring 90₂₁ is arranged between the second terminal (not shown) of the second battery cell 10₂₁ and the first terminal T_{1,31} of the third battery cell 10₃₁, and a third plate-spring 90₃₁ is arranged between the second terminal (not shown) of the third battery cell 10₃₁ and the first terminal T_{1,41} of the fourth battery cell 10₄₁.

To keep the battery cells 10₁₁, 10₂₁, 10₃₁, 10₄₁ of the first battery cell stack 110 in place with regard to the y-direction, the first battery cell stack 110 is placed between a first carrier 41 and a first separation-plate 51. Each of the first carrier 41 and the first separation-plate 51 extends parallel to the x-z-plane of the coordinate system. In the assembled state of the battery module 100, the first carrier 41 abuts against each of the first lateral sides of the battery cells 10₁₁, 10₂₁, 10₃₁, 10₄₁ facing against the y-direction, while the first separation-plate 51 abuts against each of the first lateral sides of the battery cells 10₁₁, 10₂₁, 10₃₁, 10₄₁ facing into the y-direction. The first carrier 41 as well as the first separation-plate 51 are structural parts of the battery module 100, i. e., they provide mechanical stability to the battery module 100. The battery module 100 includes a second carrier 42 and a further (or second) separation-plate 52, as will be explained below in more detail.

While the first battery cell stack 110 is illustrated in exploded fashion in Fig. 4, its members (i. e., the four battery cells 10₁₁, 10₂₁, 10₃₁, 10₄₁ and the three plate-springs 90₁₁, 90₂₁, 90₃₁ as described above) are in fact abutting against each other such that any one of the first plate-spring 90₁₁, the second plate-spring 90₂₁, and the third plate-spring 90₃₁ is sandwiched between a pair of a first and a second terminal of the two battery cells arranged next to the respective plate-spring. Furthermore, the first battery cell stack 110 is implemented into the battery module 100 in a state being compressed with regard to the x-direction. This is indicated in Fig. 4 by the two arrows X₁ and X₂ symbolizing (oppositely directed) forces acting on the first battery cell 10₁₁ and the last (fourth) battery cell 10₄₁ of the first battery cell stack 110, respectively.

Such forces may be established, e. g., by a pair of end-plates (not shown) implemented into the battery module 100, each of the end-plates extending parallel to the y-z-plane, and one of the end-plates abutting (directly or indirectly) against the first terminal side of the first battery cell 10₁₁, and the other end-plate abutting (directly or indirectly) against the second terminal side of the last (fourth) battery cell 10₄₁. As these forces are transmitted, via the casings of the battery cells 10₁₁, 10₂₁, 10₃₁, 10₄₁, through the whole first battery cell stack 110, each of the elastic plate-springs becomes deformed and clamped between the respective pair of abutting terminals.

Alternatively or additionally, the casings of each or at least some of the battery cells 10₁₁, 10₂₁, 10₃₁, 10₄₁ of the first battery cell stack 110 may be fixated, by at least one of their respective first lateral sides (i. e., their large side faces arranged parallel to the x-z-plane in Fig. 4), to the first carrier 41 and/or the first separation-plate 51. As can be taken from Fig. 4, any one of the battery cells 10₁₁, 10₂₁, 10₃₁, 10₄₁ of the first battery cell stack 110 is glued, by a respective adhesion layer 20₁₁, 20₂₁, 20₃₁, 20₄₁, onto the first carrier 41. Also, any one of the battery cells 10₁₁, 10₂₁, 10₃₁, 10₄₁ of the first battery cell stack 110 may be glued, by a respective adhesion layer (not shown), onto the first separation-plate 51. For example, the casing of the first battery cell 10₁₁ is glued, by a first adhesion layer 20₁₁, to the first carrier 41, the first adhesion layer 20₁₁ arranged between the first lateral side of the first battery cell 10₁₁ that faces against the y-direction and a side of the first carrier 41 facing into the y-direction. Also, the casing of the first battery cell 10₁₁ may be glued, by a further adhesion layer (not shown), to the first separation-plate 51, the further adhesion layer being arranged between the first lateral side of the first battery cell 10₁₁ that faces into the y-direction and a side of the first separation-plate 51 facing against the y-direction. The fixation of each of the remaining second, third, and fourth battery cell 10₂₁, 10₃₁, 10₄₁ of the first battery cell stack 110 is realized in a corresponding manner. If the battery cells 10₁₁, 10₂₁, 10₃₁, 10₄₁ (at least the first battery cell 10₁₁ and the fourth battery cell 10₄₁) are fixated to the first carrier 41 and/or the first separation-plate 51, the use of end-plates is not required.

The forces acting on the plate-springs 90₁₁, 90₂₁, 90₃₁ may also keep each of the plate-springs 90₁₁, 90₂₁, 90₃₁ in place with regard to the y-direction and/or the z-direction. Alternatively or additionally, the plate-springs may 90₁₁, 90₂₁, 90₃₁ be otherwise fixated so as to avoid a shifting of the plate-springs may 90₁₁, 90₂₁, 90₃₁ parallel to the y-z-plane (e. g., by gluing parts of them onto a part of at least one of the abutting terminals).

The setup of the second battery cell stack 120 and the third battery cell stack 130 (i. e., the assembly of their respective battery cells and plate-springs) is similar to that of the first battery cell stack 110 explained above. Specifically, the second battery cell stack 120 includes four individual battery cells 10₁₂, 10₂₂, 10₃₂, 10₄₂ as well as three further plate-springs (not shown), and the third battery cell stack 130 includes four individual battery cells 10₁₃, 10₂₃, 10₃₃, 10₄₃. As well as yet another three plate-springs (not shown). However, it must be noted that the cell stack direction of the second battery cell stack 120 is reversed in comparison to the first battery cell stack 110, i. e., for each of the individual battery cells 10₁₂, 10₂₂, 10₃₂, 10₄₂ comprised in the second battery cell stack 120, its respective first terminal side (with the respective battery cell's first terminal arranged thereon) faces into the x-direction, while its second terminal side (with the respective battery cell's second terminal arranged thereon) faces against the x-direction. The third battery cell stack 130 is orientated, in turn, like the first battery cell stack 110, i. e., for each of the individual battery cells 10₁₃, 10₂₃, 10₃₃, 10₄₃ comprised in the third battery cell stack 130, the respective first terminal side as well as the respective first terminal faces against the x-direction, while the respective second terminal side as well as the respective second terminal faces into the x-direction.

The battery cells 10₁₂, 10₂₂, 10₃₂, 10₄₂ of the second battery cell stack 120 are each sandwiched between the first separation-plate 51 and a second separation-plate 52. Further, the battery cells 10₁₃, 10₂₃, 10₃₃, 10₄₃ of the third battery cell stack 130 are each sandwiched between the second separation-plate 52 and a second carrier. Each of the second carrier 42 and the second separation-plate 52 extends parallel to the x-z-plane of the coordinate system. Hence, the battery cells 10₁₂, 10₂₂, 10₃₂, 10₄₂ of the second battery cell stack 120 as well as the battery cells 10₁₃, 10₂₃, 10₃₃, 10₄₃ of the third battery cell stack 130 are each held in place with regard to the y-direction, i. e., they are protected against shifting into or against the y-direction. The second carrier 42 as well as the second separation-plate 52 are structural parts of the battery module 100, i. e., they provide mechanical stability to the battery module 100.

Together with the first carrier 41 and the first separation-plate 51, the second carrier 42 and the second separation-plate 52, the whole battery module 100 is stabilized, and each of the first, second, and the third battery cell stacks 110, 120, 130 is protected against shifting along the y-direction. The first carrier 41 may be implemented such into the battery module 100 that it exerts a certain force (indicated in Fig. 4 by the arrow Y₁) directed into the y-direction onto the first battery cell stack 110 and thus onto the whole ensemble of battery cell stacks comprised in the battery module 100. Correspondingly, the second carrier 42 may be implemented such into the battery module 100 that it exerts a certain force (indicated in Fig. 4 by the arrow Y₂) directed against the y-direction onto the third battery cell stack 130 and thus onto the whole ensemble of battery cell stacks comprised in the battery module 100. These forces provided by the first and second carriers 41, 42 may provide a pressure against the thermal expansion of each of the individual battery cells along the y-direction and thus may protect the individual battery cells from excessive deformation (i. e., from a deformation that would distract the respective battery cell).

Similar to the first battery cell stack 110, the second battery cell stack 120 as well as the third battery cell stack 130 are each implemented into the battery module 100, while being in a compressed state. What has been the above with regard to the functioning of the compression of the first battery cell stack 110 (and the plate-springs 90₁₁, 90₂₁, 90₃₁ implemented into the first battery cell stack 110) can thus be transferred two the second battery cell stack 120 and the third battery cell stack 130 (and the respective plate-springs implemented into the first and second battery cell stacks 120, 130) in a corresponding manner.

Also, the compression of the first and second battery cell stacks 110, 120 may be realized, in the assembled battery module 100, by end-plates placed at the respective ends of these battery cells stacks. Alternatively or additionally, the individual battery cells 10₁₂, 10₂₂, 10₃₂, 10₄₂ of the second battery cell stack 120 may each be fixated by at least one of their respective first lateral sides of their casings to the first separation-plate 51 and/or the second separation-plate 52. The fixating may be realized by adhesion layers similar to the way as explained above with regard to the first battery cell stack 110. If the battery cells 10₁₂, 10₂₂, 10₃₂, 10₄₂ of the second battery cell stack 120 are fixated to the first separation-plate 51 and/or the second separation-plate 52, the use of end-plates is not required. Also, the individual battery cells 10₁₃, 10₂₃, 10₃₃, 10₄₃ of the third battery cell stack 130 may each be fixated by at least one of their respective first lateral sides of their casings to the second separation-plate 52 and/or the second carrier 42. The fixating may be realized by adhesion layers similar to the way as explained above with regard to the first battery cell stack 110. If the battery cells 10₁₃, 10₂₃, 10₃₃, 10₄₃ of the third battery cell stack 130 are fixated to the second separation-plate 52 and/or the second carrier 42, the use of end-plates is not required.

As explained before, the cell stack direction of the three battery cell stacks 110, 120, 130 arranged subsequently along the y-direction is alternating. Hence, the second terminal (not shown) of the last (fourth) battery cell 10₄₁ of the first battery cell stack 110 can be electrically connected, via a first connection-plate 61 made of an electrically conductive material, with the first terminal (not shown) of the battery cell 10₁₂ having the first position in the second battery cell stack 120 with regard to the stack direction of the second battery cell stack 120 (i. e., against the direction of the x-axis). For example, the first connection-plate 61 may be fusion-welded onto the afore-mentioned terminals. Since the last battery cell 10₄₁ of the first battery cell stack 110 and the first battery cell 10₁₂ of the second battery cell stack 120 are arranged next to each other with regard to the y-direction, the dimensions of the first connection-plate 61 may be only small.

Correspondingly, the second terminal T_{2,42} of battery cell 10₄₂ having the last (fourth) position in the second battery cell stack 120 with regard to the stack direction of the second battery cell stack 120 (i. e., against the direction of the x-axis) can be electrically connected, via a second connection-plate 62 made of an electrically conductive material, with the first terminal T_{1,13} of the battery cell 10₁₃ having the first position in the third battery cell stack 130 with regard to the stack direction of the third battery cell stack 130 (i. e., the direction of the x-axis). For example, the second connection-plate 62 may be fusion-welded onto the afore-mentioned terminals. Since the last battery cell 10₄₂ of the second battery cell stack 120 and the first battery cell 10₁₃ of the third battery cell stack 130 are arranged next to each other with regard to the y-direction, the dimensions of the second connection-plate 62 may be only small.

It is understood that the concept of the arrangement of battery cells stacks as well as of the individual battery cells comprised in these battery cell stacks as explained above with reference to the embodiment of the battery module 100 illustrated in Fig. 4 can be easily generalized. For example, instead of using four individual battery cells per battery cell stack, the total number of N battery cells per battery stack (with N being an integer number with N ≥ 2 and N ≠ 4) may be used in alternative embodiments.

Also, the number of employed battery cell stacks can be varied. That is, any total number M of battery cell stacks with M ≥ 1 may be used in embodiments of the battery module according to the present disclosure. In embodiments employing only a total number of M battery cell stacks, the total number of M - 1 separating-plates may be used. Consequently, when using only a single battery cell stack, no separation-plate is required, as the single battery cell stack may then be held in place already by a pair of carriers, between which the single battery cell stack is sandwiched.

In such embodiments, wherein a total number of M battery cell stacks (and thus, each of the individual battery cells) are electrically connected in series, it is desired that the battery cell stacks are arranged subsequently to one another with alternating stack directions (or stack orientations), as described in the context of Fig. 4 for the battery module 100 including M = 3 battery cell stacks.

However, in embodiments, wherein the battery cell stacks shall be connected in parallel (while for each of the stacks, the individual battery cells comprised in that stack are still connected in series), it is desired that the battery cell stacks are arranged subsequently to one another having the same stack directions. Then, the outermost first terminals of all battery cell stacks point into the same direction, and the outermost second terminals of all battery cell stacks point into the opposite direction. Thus, the outermost first terminals of all battery cell stacks can be connected using a single first busbar, and, correspondingly, the outermost second terminals of all battery cell stacks can be connected using a single second busbar.

As already pointed out above with reference to Fig. 3, at least one of the plate-springs arranged between pairs of facing terminals maybe equipped with a portion serving as a connector for an electric line or conduit (not shown). This way, for each of these connectors (i. e., second portions of these plate-springs as described in more detail below in the context of Figs. 5 and 6), the voltage between this connector and the reference potential can be measured and supervised. Also, when tapping a voltage between different plate-springs and another electric potential (e. g., the first terminal T_{1,11} of the first battery cell 10₁₁ of the first battery cell stack 110 or the second terminal of the last battery cell 10₄₃ of the third battery cell stack 130), different voltages can be provided by the battery module 100.

The above explanations of Fig. 4 can be summarized as follows. Fig. 4 schematically shows an explosion view from an example of a short module with carrier and separation-plate. For the plate-springs, no fusion-welding necessary. Only for electrical connections on the ends of the battery cell stacks 110, 120, 130, fusion-welded busbars 61, 62 may be employed. All battery cell stacks and plate-springs may be pre-compressed together and fixed by gluing in their position to create the module. The separation-plates 51, 52 have two functions in this battery module: (i) the separation of the individual battery cells against thermal propagation, and (ii) providing structural parts in the battery module 100.

Figure 5 schematically illustrates an example of a plate-spring 90 that may be used in embodiments of the battery module according to the present disclosure. Fig. 5A provides a perspective view of the plate-spring 90, while Fig. 5B is a cross-sectional view of the same plate-spring 90 taken parallel to the x-z-plane along the dashed line A-A of Fig. 5A. The plate-spring 90 includes a body 92 formed as an essentially planar, rectangular plate made of an electrically conductive and mechanically elastic material. The material may be aluminum or copper. In Fig. 5, the body 92 extends parallel to the y-z-plane of the coordinate system. However, the body 92 includes an indented area 94 protruding from the remaining area of the body 92 against the x-direction. The plate-spring 90 is made of one piece of material. In the example depicted in Fig. 5, the indented area 94 itself is formed as or at least includes a planar region B.

The plate-spring 90 is intended for being sandwiched or clamped between two terminals of two adjacent battery cells (e. g., the second terminal T_{2,i} of the i-th battery cell 10ᵢ and the first terminal T_{1,i+1} of the (i+1)-th battery cell 10ᵢ₊₁ as illustrated in Fig. 3), each of the two terminals having an essentially flat or planar surface extending likewise parallel to the y-z-plane of the coordinate system. As the material of the plate-spring 90 is electrically conductive, the plate-spring 90 establishes an electric connection between these two terminals, when being clamped between the latter.

In Fig. 5, the plate-spring 90 is shown in an uncompressed state. However, when the plate-spring 90 is clamped between such two terminals facing each other, the plate-spring 90 becomes deformed in comparison to its uncompressed state. The plate-spring 90 may be deformed such between the two terminals that the indented area 94 is pushed into the x-direction such that the overall extension of the plate-spring 90 along the x-direction becomes smaller in comparison to the uncompressed state. However, since the material of the plate-spring 90 is elastic, the plate-spring 90 expands again with regard to the x-direction up to certain extent (viz. the extend along the x-direction of the uncompressed plate-spring 90). This way, the plate-spring 90 ensures a safe electrical connection between the two terminals, provided that the gap does not exceed the extension of the plate-spring 90 in its uncompressed state.

In embodiments, the dimensions of the plate-spring 90 with regard to the y-direction and/or the z-direction may be larger than the area of the terminals, between which the plate-spring 90 is intended to be placed. For example, the area of the terminals may correspond to the area of a first portion 92a of the plate-spring 90 (the portion of the body 92 above the dashed line X-X in Fig. 5). The indented area 94 is arranged on the first portion 92a. Then, when the plate-spring 90 is clamped between the two terminals, only the first portion 92a may be sandwiched between the terminals, while a remaining second portion 92b of the plate-spring 90 (the portion of the body 92 below the dashed line X-X) protrudes from between the terminals. Accordingly, the second portion 92b may serve as a connector for an electric line such as a wire, a busbar etc. This allows for monitoring or tapping a voltage between the electric potential of the plate-spring 90 and a reference potential, as already explained above with reference to Figs. 3 and 4.

If both of the terminals, between which the plate-spring 90 is configured to be sandwiched or clamped, exhibits a flat or planar shape extending parallel to the y-z-plane of the depicted coordinate system, the plate-spring 90 is configured for being arranged between these terminals in an orientation such that the essentially planar body 92 likewise extends parallel to the y-z-plane, as shown in Fig. 5. However, instead of protruding against the x-direction from the surrounding parts of the body 92 (as shown in Fig. 5), the indented area 94 may also protrude into the x-direction in that case.

Also, number and/or shape of the indented portion(s) used in embodiments of the plates-spring may vary. For example, Figure 6 schematically illustrates a cross-sectional through another embodiment of a plate-spring 90' that may be implemented into embodiments of the battery module according to the present disclosure. Like the plate-spring 90 of Fig. 5, the plate-spring 90' of Fig. 6 includes the body 92 extending, with regard to the shown coordinate system, along the y-z-plane. Again, the body 92 includes a first portion 92a being configured for being sandwiched or clamped between two facing terminals of a pair of adjacent battery cells, and the second portion 92b configured for serving as a connector for an electric line or conduit. However, in contrast to the plate-spring 90 shown in Fig. 5 including only a single indented area 94, the plate-spring 90' of Fig. 6 includes four indentations 941, 942, 943, 944 protruding from the body 92 against the x-direction and arranged in a corrugated or rippled area 94' of the body 92. The corrugated or rippled area 94'is arranged on the first portion 92a only.

### Reference signs

- 10: battery cell
- 10ᵢ, 10ᵢⱼ: battery cells (with i, j denoting an integer number)
- 10a: casing
- 11: first terminal side
- 12ᵢ: second terminal side
- 14: one of the two opposing first lateral sides
- 16: one of the two opposing second lateral sides
- 20ᵢⱼ: adhesion layers
- 41: first carrier
- 42: second carrier
- 51: first separation-plate
- 52: second separation-plate
- 61: first connection-plate
- 62: second connection-plate
- 90, 90': spring-plates
- 90ᵢ, 90ᵢⱼ: spring-plates (with i, j denoting a natural number)
- 92, 92ᵢ: body of plate-spring
- 92a, 92aᵢ: first portion
- 92b, 92bᵢ: second portion
- 94: indented area
- 94': corrugated or rippled area 94'

- 100: battery module
- 110: first battery cell stack
- 120: second battery cell stack
- 130: third battery cell stack
- 210: battery cell
- 210a: casing
- 941, 942, 943, 944: indentations

- A-A: dashed line
- B: planar region
- Gᵢ: interstice or gap
- P₁, P₂: arrows
- T₁: first terminal
- T_{1,i}, T_{1,ij}: first terminals (with i, j denoting integer numbers)
- T₂: second terminal
- T_{2,i}, T_{2,ij}: second terminals (with i, j denoting integer numbers)
- V: venting outlet
- W: cut-out
- X-X: dashed line
- X₁, X₂: arrows
- Y₁, Y₂: arrows
- x, y, z: axes of a Cartesian coordinate system

## Claims

1. A battery module (100), comprising:
at least one battery cell stack (110, 120, 130) having a plurality of battery cells (10, 10ᵢ, 10ᵢ₊₁, 10₁₁, ..., 10₄₁, 10₁₂, ..., 10₄₃) arranged in a row along a stack direction being predefined for that stack;
each of the battery cells (10, 10ᵢ, 10ᵢ₊₁, 10₁₁, ..., 10₄₃) comprising a casing (10a) having a parallelepiped shape with a pair of first lateral sides arranged opposite to each other, a pair of second lateral sides arranged opposite to each other and perpendicular to each of the first lateral sides, a first terminal side (11) perpendicular to each of the first lateral sides and each of the second lateral sides, and a second terminal side (12) perpendicular to each of the first lateral sides and each of the second lateral sides, the first terminal side (11) and the second terminal side (12) arranged opposite to each other, wherein each of the first lateral sides has an area larger than the area of each of the second lateral sides and larger than each of the first terminal side (11) and the second terminal side (12);
each battery cell (10, 10ᵢ, 10ᵢ₊₁, 10₁₁, ..., 10₄₃) comprising a first terminal (T₁, T_{1,i+1}, T_{1,11}, ..., T_{1,41}, T_{1,13}) arranged on its first terminal side and a second terminal (T₂, T_{2,i}, T_{2,42}) arranged on its second terminal side;
wherein, in each of the battery cell stacks (110, 120, 130), when viewing into the stack direction of that battery cell stack, the second terminal side of each battery cell except for the last battery cell faces the first terminal side of a subsequently arranged battery cell;
wherein the battery module further comprises one or more plate-springs (90, 90', 90ᵢ, 90₁₁, 90₁₂, 90₁₃) made of an electrically conductive and elastic material;
wherein at least in one battery cell stack (110, 120, 130), at least for one pair of a first terminal side and a second terminal side with the first terminal side of the pair facing the second terminal side of the pair, one of the plate-springs (90, 90', 90ᵢ, 90₁₁, 90₁₂, 90₁₃) is clamped between the first terminal (T₁, T_{1,i+1}, T_{1,11}, ..., T_{1,41}, T_{1,13}) on the first terminal side of the pair and the second terminal (T₂, T_{2,i}, T_{2,42}) on the second terminal side of the pair.

2. The battery module (100) according to claim 1, wherein for each pair of a first terminal side (11) and a second terminal side (12) with the first terminal side (11) of the pair facing the second terminal side (12) of the pair, one of the plate-springs (90, 90', 90ᵢ, 90₁₁, 90₁₂, 90₁₃) is clamped between the first terminal (T₁, T_{1,i+1}, T_{1,11}, ..., T_{1,41}, T_{1,13}) on the first terminal side (11) of the pair and the second terminal (T₂, T_{2,i}, T_{2,42}) on the second terminal side (12) of the pair.

3. The battery module (100) according to claim 1 or 2, wherein at least some of the plate-springs (90, 90', 90ᵢ, 90₁₁, 90₁₂, 90₁₃) arranged between a first terminal (T₁, T_{1,i+1}, T_{1,11}, ..., T_{1,41}, T_{1,13}) of a first terminal side (11) and a second terminal (T₂, T_{2,i}, T_{2,42}) of a second terminal side (12) with the first terminal side (11) facing the second terminal side (12) are pre-compressed with regard to the stack direction of the battery cell stack (110, 120, 130) comprising the respective plate-spring (90, 90', 90ᵢ, 90₁₁, 90₁₂, 90₁₃).

4. The battery module (100) according to any one of claims 1 to 3,
wherein the battery module (100) comprises at least one group of battery cell stacks;
wherein each group of battery cell stacks comprises a plurality of battery cell stacks (110, 120, 130);
wherein the battery module further comprises one or more separation-plates (51, 52);
wherein, for each group, the stack directions of each battery cell stack (110, 120, 130) of that group are parallel or antiparallel to each other;
wherein, for each group, the battery cell stacks (110, 120, 130) of that group are arranged next to each other on a virtual plane along a direction (y) perpendicular to the stack direction of the battery cell stacks (110, 120, 130) of that group;
wherein, for each group, between any two neighbored battery cell stacks, a separation-plate (51, 52) is arranged.

5. The battery module (100) according to claim 4, wherein at least one separation-plate (51, 52) is a structural part of the battery module.

6. The battery module (100) according to claim 4 or 5, wherein at least one separation-plate (51, 52) is made of an electrically insulating material.

7. The battery module (100) according to any one of claims 4 to 6, wherein at least one separation-plate (51, 52) is made of a thermally insulating material.

8. The battery module (100) according to any one of claims 4 to 7, as far as depending on claim 3, wherein for any pre-compressed plate-spring (90, 90', 90ᵢ, 90₁₁, 90₁₂, 90₁₃), the two battery cells adjacent to that plate-spring (90, 90', 90ᵢ, 90₁₁, 90₁₂, 90₁₃) with regard to the stack direction of the battery cell stack (110, 120, 130) comprising the adjacent battery cells are adhered to at least one neighbored separation-plate (51, 52).

9. The battery module (100) according to any one of claims 1 to 8,
wherein the battery module (100) comprises at least two battery cell stacks (110, 120, 130);
wherein, for each of the battery cell stacks (110, 120, 130), when viewing into the stack direction of that battery cell stack, a first battery cell stack terminal is formed by the first terminal of the first battery cell arranged in that battery cell stack and a second battery cell stack terminal is formed by the second terminal of the last battery cell arranged in that battery cell stack;
wherein the battery module further comprises at least one connection-plate (61, 62);
wherein each of the connection-plates (61, 62) electrically connects a group of at least two battery cell stacks in that for each battery cell stack of that group of at least two battery cell stacks, either the first battery cell stack terminal or the second battery cell stack terminal is fixated to that connection-plate (61, 62).

10. The battery module (100) according to any one of claims 1 to 9, wherein at least one of the plate-springs (90, 90', 90ᵢ, 90₁₁, 90₁₂, 90₁₃) is formed as an essentially planar plate (92) or essentially planar disc with at least one indentation (94, 941, 942, 943, 944).

11. The battery module (100) according to any one of claims 1 to 10, wherein at least one of the plate-springs (90, 90', 90ᵢ, 90₁₁, 90₁₂, 90₁₃) is made of aluminum or copper.

12. A battery pack comprising one or more battery modules (100) according to any one of claims 1 to 11.

13. The battery pack according to claim 12,
further comprising a voltage measurement circuit;
wherein the voltage measurement circuit comprises at least one electric line; and
wherein at least one of the plate-springs (90, 90', 90ᵢ, 90₁₁, 90₁₂, 90₁₃) is electrically connected to an electric line.

14. A vehicle comprising at least one battery module (100) according to any one of claims 1 to 11 and/or at least one battery system according to claim 12 or 13.

15. A method for assembling a battery module (100) according to any one of claims 1 to 11, the method comprising the following steps:
a) providing a plurality of battery cells (10, 10ᵢ, 10ᵢ₊₁, 10₁₁, ..., 10₄₃), each of the battery cells comprising a casing (10a) having parallelepiped shape with a pair of first lateral sides arranged opposite to each other, a pair of second lateral sides arranged opposite to each other and perpendicular to each of the first lateral sides, a first terminal side (11) perpendicular to each of the first lateral sides and each of the second lateral sides, and a second terminal side (12) perpendicular to each of the first lateral sides and each of the second lateral sides, the first terminal side (11) and the second terminal side (12) arranged opposite to each other, wherein each of the first lateral sides has an area larger than the area of each of the second lateral sides and larger than each of the first terminal side (11) and the second terminal side (12), and each battery cell (10, 10ᵢ, 10ᵢ₊₁, 10₁₁, ..., 10₄₃) comprising a first terminal (T₁, T_{1,i+1}, T_{1,11}, ..., T_{1,41}, T_{1,13}) arranged on the first terminal side and a second terminal (T₂, T_{2,i}, T_{2,42}) arranged on the second terminal side;
b) grouping the battery cells (10, 10ᵢ, 10ᵢ₊₁, 10₁₁, ..., 10₄₃) into a plurality of battery cell stacks (110, 120, 130), each of the stacks comprising a plurality of battery cells arranged in a row along a stack direction being predefined for that stack, wherein in each of the battery cell stacks (110, 120, 130), when viewing into the stack direction of that battery cell stack, the second terminal side of each battery cell except for the last battery cell faces the first terminal side of a subsequently arranged battery cell;
c) placing, in at least one battery cell stack (110, 120, 130), for at least for one pair of a first terminal side and a second terminal side with the first terminal side of the pair facing the second terminal side of the pair, a plate-spring (90, 90', 90ᵢ, 90₁₁, 90₁₂, 90₁₃) between the first terminal on the first terminal side of the pair and the second terminal on the second terminal side of the pair;
d) pressing each of the battery cell stacks (110, 120, 130) together along their respective stack direction;
f) fixating each of the battery cell stacks (110, 120, 130), while being pressed together according to step d), in the battery module (100).

## Patentansprüche

1. Batteriemodul (100), umfassend:
mindestens einen Batteriezellenstapel (110, 120, 130) mit mehreren Batteriezellen (10, 10ᵢ, 10ᵢ₊₁, 10₁₁, ..., 10₄₁, 10₁₂, ..., 10₄₃), die in einer Reihe entlang einer für diesen Stapel vordefinierten Stapelrichtung angeordnet sind;
wobei jede der Batteriezellen (10, 10ᵢ, 10ᵢ₊₁, 10₁₁, ..., 10₄₃) ein Gehäuse (10a) in Form eines Parallelepipeds mit einem Paar erster Lateralseiten, die einander gegenüberliegend angeordnet sind, einem Paar zweiter Lateralseiten, die einander gegenüberliegend und senkrecht zu jeder der ersten Lateralseiten angeordnet sind, einer ersten Anschlussseite (11) senkrecht zu jeder der ersten Lateralseiten und jeder der zweiten Lateralseiten und einer zweiten Anschlussseite (12) senkrecht zu jeder der ersten Lateralseiten und jeder der zweiten Lateralseiten umfasst, wobei die erste Anschlussseite (11) und die zweite Anschlussseite (12) einander gegenüberliegend angeordnet sind, wobei jede der ersten Lateralseiten eine Fläche aufweist, die größer als die Fläche jeder der zweiten Lateralseiten und größer als die der ersten Anschlussseite (11) und der zweiten Anschlussseite (12) ist;
wobei jede Batteriezelle (10, 10ᵢ, 10ᵢ₊₁, 10₁₁, ..., 10₄₃) einen ersten Anschluss (T₁, T_{1,i+1}, T_{1,11}, ..., T_{1,41}, T_{1,13}), der an ihrer ersten Anschlussseite angeordnet ist, und einen zweiten Anschluss (T₂, T_{2,i}, T_{2,42}) umfasst, der an ihrer zweiten Anschlussseite angeordnet ist;
wobei in jedem der Batteriezellenstapel (110, 120, 130), wenn man in Stapelrichtung dieses Batteriezellenstapels blickt, die zweite Anschlussseite jeder Batteriezelle mit Ausnahme der letzten Batteriezelle der ersten Anschlussseite einer nachfolgend angeordneten Batteriezelle zugewandt ist;
wobei das Batteriemodul ferner eine oder mehrere Plattenfedern (90, 90', 90ᵢ, 90₁₁, 90₁₂, 90₁₃) aus einem elektrisch leitfähigen und elastischen Material umfasst;
wobei zumindest in einem Batteriezellenstapel (110, 120, 130) zumindest für ein Paar aus einer ersten Anschlussseite und einer zweiten Anschlussseite, wobei die erste Anschlussseite des Paares der zweiten Anschlussseite des Paares zugewandt ist, eine der Plattenfedern (90, 90', 90ᵢ, 90₁₁, 90₁₂, 90₁₃) zwischen dem ersten Anschluss (T₁, T_{1,i+1}, T_{1,11}, ..., T_{1,41}, T_{1,13}) auf der ersten Anschlussseite des Paares und dem zweiten Anschluss (T₂, T_{2,i}, T_{2,42}) auf der zweiten Anschlussseite des Paares eingeklemmt ist.

2. Batteriemodul (100) nach Anspruch 1, wobei für jedes Paar aus einer ersten Anschlussseite (11) und einer zweiten Anschlussseite (12), wobei die erste Anschlussseite (11) des Paares der zweiten Anschlussseite (12) des Paares zugewandt ist, eine der Plattenfedern (90, 90', 90ᵢ, 90₁₁, 90₁₂, 90₁₃) zwischen dem ersten Anschluss (T₁, T_{1,i+1}, T_{1,11}, T_{1,41}, T_{1,13}) auf der ersten Anschlussseite (11) des Paares und dem zweiten Anschluss (T₂, T_{2,i}, T_{2,42}) auf der zweiten Anschlussseite (12) des Paares eingeklemmt ist.

3. Batteriemodul (100) nach Anspruch 1 oder 2, wobei zumindest einige der Plattenfedern (90, 90', 90ᵢ, 90₁₁, 90₁₂, 90₁₃), die zwischen einem ersten Anschluss (T₁, T_{1,i+1}, T_{1,11}, ..., T_{1,41}, T_{1,13}) einer ersten Anschlussseite (11) und einem zweiten Anschluss (T₂, T_{2,i}, T_{2,42}) einer zweiten Anschlussseite (12) angeordnet sind, wobei die erste Anschlussseite (11) der zweiten Anschlussseite (12) zugewandt ist, in Bezug auf die Stapelrichtung des Batteriezellenstapels (110, 120, 130), der die jeweilige Plattenfeder (90, 90', 90ᵢ, 90₁₁, 90₁₂, 90₁₃) umfasst, vorverdichtet sind.

4. Batteriemodul (100) nach einem der Ansprüche 1 bis 3,
wobei das Batteriemodul (100) mindestens eine Gruppe von Batteriezellenstapeln umfasst;
wobei jede Gruppe von Batteriezellenstapeln mehrere Batteriezellenstapel (110, 120, 130) umfasst;
wobei das Batteriemodul ferner eine oder mehrere Trennplatten (51, 52) umfasst;
wobei für jede Gruppe die Stapelrichtungen jedes Batteriezellenstapels (110, 120, 130) dieser Gruppe parallel oder antiparallel zueinander sind;
wobei für jede Gruppe die Batteriezellenstapel (110, 120, 130) dieser Gruppe nebeneinander auf einer virtuellen Ebene entlang einer Richtung (y) senkrecht zur Stapelrichtung der Batteriezellenstapel (110, 120, 130) dieser Gruppe angeordnet sind;
wobei für jede Gruppe zwischen zwei benachbarten Batteriezellenstapeln eine Trennplatte (51, 52) angeordnet ist.

5. Batteriemodul (100) nach Anspruch 4, wobei mindestens eine Trennplatte (51, 52) ein Bauteil des Batteriemoduls ist.

6. Batteriemodul (100) nach Anspruch 4 oder 5, wobei mindestens eine Trennplatte (51, 52) aus einem elektrisch isolierenden Material besteht.

7. Batteriemodul (100) nach einem der Ansprüche 4 bis 6, wobei mindestens eine Trennplatte (51, 52) aus einem wärmeisolierenden Material besteht.

8. Batteriemodul (100) nach einem der Ansprüche 4 bis 7, soweit es von Anspruch 3 abhängt, wobei für jede vorverdichtete Plattenfeder (90, 90', 90ᵢ, 90₁₁, 90₁₂, 90₁₃) die beiden Batteriezellen, die in Bezug auf die Stapelrichtung des Batteriezellenstapels (110, 120, 130), der die benachbarten Batteriezellen umfasst, an diese Plattenfeder (90, 90', 90ᵢ, 90₁₁, 90₁₂, 90₁₃) angrenzen, an mindestens einer benachbarten Trennplatte (51, 52) haften.

9. Batteriemodul (100) nach einem der Ansprüche 1 bis 8,
wobei das Batteriemodul (100) mindestens zwei Batteriezellenstapel (110, 120, 130) umfasst;
wobei für jeden der Batteriezellenstapel (110, 120, 130), wenn man in Stapelrichtung dieses Batteriezellenstapels blickt, ein erster Batteriezellenstapelanschluss durch den ersten Anschluss der ersten Batteriezelle, die in diesem Batteriezellenstapel angeordnet ist, und ein zweiter Batteriezellenstapelanschluss durch den zweiten Anschluss der letzten Batteriezelle, die in diesem Batteriezellenstapel angeordnet ist, gebildet ist;
wobei das Batteriemodul ferner mindestens eine Verbindungsplatte (61, 62) umfasst; wobei jede der Verbindungsplatten (61, 62) eine Gruppe von mindestens zwei Batteriezellenstapeln elektrisch verbindet, wobei für jeden Batteriezellenstapel dieser Gruppe von mindestens zwei Batteriezellenstapeln entweder der erste Batteriezellenstapelanschluss oder der zweite Batteriezellenstapelanschluss an dieser Verbindungsplatte (61, 62) fixiert ist.

10. Batteriemodul (100) nach einem der Ansprüche 1 bis 9, wobei mindestens eine der Plattenfedern (90, 90', 90ᵢ, 90₁₁, 90₁₂, 90₁₃) als im Wesentlichen ebene Platte (92) oder im Wesentlichen ebene Scheibe mit mindestens einer Vertiefung (94, 941, 942, 943, 944) ausgebildet ist.

11. Batteriemodul (100) nach einem der Ansprüche 1 bis 10, wobei mindestens eine der Plattenfedern (90, 90', 90ᵢ, 90₁₁, 90₁₂, 90₁₃) aus Aluminium oder Kupfer besteht.

12. Batteriepack, umfassend ein oder mehrere Batteriemodule (100) nach einem der Ansprüche 1 bis 11.

13. Batteriepack nach Anspruch 12,
umfassend ferner eine Spannungsmessschaltung;
wobei die Spannungsmessschaltung mindestens eine elektrische Leitung umfasst; und
wobei mindestens eine der Plattenfedern (90, 90', 90ᵢ, 90₁₁, 90₁₂, 90₁₃) elektrisch mit einer elektrischen Leitung verbunden ist.

14. Fahrzeug, umfassend mindestens ein Batteriemodul (100) nach einem der Ansprüche 1 bis 11 und/oder mindestens ein Batteriesystem nach Anspruch 12 oder 13.

15. Verfahren zum Zusammenbau eines Batteriemoduls (100) nach einem der Ansprüche 1 bis 11, wobei das Verfahren die folgenden Schritte umfasst:
a) Bereitstellen mehrerer Batteriezellen (10, 10ᵢ, 10ᵢ₊₁, 10₁₁, ..., 10₄₃), von denen jede ein Gehäuse (10a) in Form eines Parallelepipeds mit einem Paar erster Lateralseiten, die einander gegenüberliegend angeordnet sind, einem Paar zweiter Lateralseiten, die einander gegenüberliegend und senkrecht zu jeder der ersten Lateralseiten angeordnet sind, einer ersten Anschlussseite (11) senkrecht zu jeder der ersten Lateralseiten und jeder der zweiten Lateralseiten und einer zweiten Anschlussseite (12) senkrecht zu jeder der ersten Lateralseiten und jeder der zweiten Lateralseiten umfasst, wobei die erste Anschlussseite (11) und die zweite Anschlussseite (12) einander gegenüberliegend angeordnet sind, wobei jede der ersten Lateralseiten eine Fläche aufweist, die größer als die Fläche jeder der zweiten Lateralseiten und größer als die Fläche der ersten Anschlussseite (11) und der zweiten Anschlussseite (12) ist, und wobei jede Batteriezelle (10,10ᵢ, 10ᵢ₊₁, 10₁₁, ..., 10₄₃) einen ersten Anschluss (T₁, T_{1,i+1}, T_{1,11}, ..., T_{1,41}, T_{1,13}), der auf der ersten Anschlussseite angeordnet ist, und einen zweiten Anschluss (T₂, T_{2,i}, T_{2,42}) umfasst, der auf der zweiten Anschlussseite angeordnet ist;
b) Gruppieren der Batteriezellen (10, 10ᵢ, 10ᵢ₊₁, 10₁₁, ..., 10₄₃) zu mehreren Batteriezellenstapeln (110, 120, 130), von denen jeder mehrere Batteriezellen umfasst, die in einer Reihe entlang einer für diesen Stapel vordefinierten Stapelrichtung angeordnet sind, wobei in jedem der Batteriezellenstapel (110, 120, 130) bei Betrachtung in Stapelrichtung dieses Batteriezellenstapels die zweite Anschlussseite jeder Batteriezelle mit Ausnahme der letzten Batteriezelle der ersten Anschlussseite einer nachfolgend angeordneten Batteriezelle zugewandt ist;
c) Anordnen einer Plattenfeder (90, 90', 90ᵢ, 90₁₁, 90₁₂, 90₁₃), in mindestens einem Batteriezellenstapel (110, 120, 130) für mindestens ein Paar aus einer ersten Anschlussseite und einer zweiten Anschlussseite, wobei die erste Anschlussseite des Paares der zweiten Anschlussseite des Paares zugewandt ist, zwischen dem ersten Anschluss auf der ersten Anschlussseite des Paares und dem zweiten Anschluss auf der zweiten Anschlussseite des Paares;
d) Zusammendrücken jedes der Batteriezellenstapel (110, 120, 130) entlang ihrer jeweiligen Stapelrichtung;
f) Fixieren jedes der Batteriezellenstapel (110, 120, 130) während des Zusammendrückens gemäß Schritt d) in dem Batteriemodul (100).

## Revendications

1. Module de batterie (100), comportant :
au moins un empilement d'éléments de batterie (110, 120, 130) ayant une pluralité d'éléments de batterie (10, 10ᵢ, 10ᵢ₊₁, 10₁₁, ..., 10₄₁, 10₁₂, ..., 10₄₃) agencés en rangée le long d'une direction d'empilement étant prédéfinie pour cet empilement ;
chacun des éléments de batterie (10, 10ᵢ, 10ᵢ₊₁, 10₁₁, ..., 10₄₃) comportant un boîtier (10a) de forme parallélépipédique avec une paire de premiers côtés latéraux agencés opposés l'un à l'autre, une paire de seconds côtés latéraux agencés opposés l'un à l'autre et perpendiculaires à chacun des premiers côtés latéraux, un premier côté de borne (11) perpendiculaire à chacun des premiers côtés latéraux et à chacun des seconds côtés latéraux, et un second côté de borne (12) perpendiculaire à chacun des premiers côtés latéraux et à chacun des seconds côtés latéraux, le premier côté de borne (11) et le second côté de borne (12) agencés opposés l'un à l'autre, dans lequel chacun des premiers côtés latéraux présente une zone plus grande que la zone de chacun des seconds côtés latéraux et plus grande que chacun du premier côté de borne (11) et du second côté de borne (12) ;
chaque élément de batterie (10, 10ᵢ, 10ᵢ₊₁, 10₁₁, ..., 10₄₃) comportant une première borne (T₁, T_{1,i+1}, T_{1,11}, ..., T_{1,41}, T_{1,13}) agencée sur son premier côté de borne et une seconde borne (T₂, T_{2,i}, T_{2,42}) agencée sur son second côté de borne ;
dans lequel, dans chacun des empilements d'éléments de batterie (110, 120, 130), lorsqu'on regarde dans la direction d'empilement de cet empilement d'éléments de batterie, le second côté de borne de chaque élément de batterie, à l'exception du dernier élément de batterie, fait face au premier côté de borne d'un élément de batterie agencé ensuite ;
dans lequel le module de batterie comporte en outre un ou plusieurs ressorts à lames (90, 90', 90ᵢ, 90₁₁, 90₁₂, 90₁₃) constitués d'un matériau électriquement conducteur et élastique ;
dans lequel au moins dans un empilement d'éléments de batterie (110, 120, 130), au moins pour une paire d'un premier côté de borne et d'un second côté de borne avec le premier côté de borne de la paire orienté vers le second côté de borne de la paire, l'un des ressorts à lames (90, 90', 90ᵢ, 90₁₁, 90₁₂, 90₁₃) est serré entre la première borne (T₁, T_{1,i+1}, T_{1,11}, ..., T_{1,41}, T_{1,13}) sur le premier côté de borne de la paire et la seconde borne (T₂, T_{2,i}, T_{2,42}) sur le second côté de borne de la paire.

2. Module de batterie (100) selon la revendication 1, dans lequel pour chaque paire d'un premier côté de borne (11) et d'un second côté de borne (12) avec le premier côté de borne (11) de la paire orienté vers le second côté de borne (12) de la paire, l'un des ressorts à lames (90, 90', 90ᵢ, 90₁₁, 90₁₂, 90₁₃) est serré entre la première borne (T₁, T_{1,i+1}, T_{1,11}, ..., T_{1,41}, T_{1,13}) du premier côté de borne (11) de la paire et la seconde borne (T₂, T_{2,i}, T_{2,42}) du second côté de borne (12) de la paire.

3. Module de batterie (100) selon la revendication 1 ou 2, dans lequel au moins certains des ressorts à lames (90, 90', 90ᵢ, 90₁₁, 90₁₂, 90₁₃) agencés entre une première borne (T₁, T_{1,i+1}, T_{1,11}, ... , T_{1,41}, T_{1,13}) d'un premier côté de borne (11) et une seconde borne (T₂, T_{2,i}, T_{2,42}) d'un second côté de borne (12) avec le premier côté de borne (11) orienté vers le second côté de borne (12) sont précomprimés par rapport à la direction d'empilement de l'empilement d'éléments de batterie (110, 120, 130) comportant le ressort à lames (90, 90', 90ᵢ, 90₁₁, 90₁₂, 90₁₃) respectif.

4. Module de batterie (100) selon l'une quelconque des revendications 1 à 3,
dans lequel le module de batterie (100) comporte au moins un groupe d'empilements d'éléments de batterie ;
dans lequel chaque groupe d'empilements d'éléments de batterie comporte une pluralité d'empilements d'éléments de batterie (110, 120, 130) ;
dans lequel le module de batterie comporte en outre une ou plusieurs plaques de séparation (51, 52) ;
dans lequel, pour chaque groupe, les directions d'empilement de chaque empilement d'éléments de batterie (110, 120, 130) de ce groupe sont parallèles ou antiparallèles les unes aux autres ;
dans lequel, pour chaque groupe, les empilements d'éléments de batterie (110, 120, 130) de ce groupe sont agencés les uns à côté des autres sur un plan virtuel le long d'une direction (y) perpendiculaire à la direction d'empilement des empilements d'éléments de batterie (110, 120, 130) de ce groupe ;
dans lequel, pour chaque groupe, entre deux empilements d'éléments de batterie adjacents quelconques, une plaque de séparation (51, 52) est agencée.

5. Module de batterie (100) selon la revendication 4, dans lequel au moins une plaque de séparation (51, 52) est une partie structurelle du module de batterie.

6. Module de batterie (100) selon la revendication 4 ou 5, dans lequel au moins une plaque de séparation (51, 52) est constituée d'un matériau électriquement isolant.

7. Module de batterie (100) selon l'une quelconque des revendications 4 à 6, dans lequel au moins une plaque de séparation (51, 52) est constituée d'un matériau thermiquement isolant.

8. Module de batterie (100) selon l'une quelconque des revendications 4 à 7, dans la mesure où elle dépend de la revendication 3, dans lequel pour tout ressort à lames (90, 90', 90ᵢ, 90₁₁, 90₁₂, 90₁₃) précomprimé, les deux éléments de batterie adjacents à ce ressort à lames (90, 90', 90ᵢ, 90₁₁, 90₁₂, 90₁₃) par rapport à la direction d'empilement de l'empilement d'éléments de batterie (110, 120, 130) comportant les éléments de batterie adjacents sont collés à au moins une plaque de séparation (51, 52) voisine.

9. Module de batterie (100) selon l'une quelconque des revendications 1 à 8,
dans lequel le module de batterie (100) comporte au moins deux empilements d'éléments de batterie (110, 120, 130) ;
dans lequel, pour chacun des empilements d'éléments de batterie (110, 120, 130), lorsqu'on regarde dans la direction d'empilement de cet empilement d'éléments de batterie, une première borne d'empilement d'éléments de batterie est formée par la première borne du premier élément de batterie agencé dans cet empilement d'éléments de batterie et une seconde borne d'empilement d'éléments de batterie est formée par la seconde borne du dernier élément de batterie agencé dans cet empilement d'éléments de batterie ;
dans lequel le module de batterie comporte en outre au moins une plaque de connexion (61, 62) ;
dans lequel chacune des plaques de connexion (61, 62) connecte électriquement un groupe d'au moins deux empilements d'éléments de batterie de sorte que, pour chaque empilement d'éléments de batterie de ce groupe d'au moins deux empilements d'éléments de batterie, soit la première borne d'empilement d'éléments de batterie, soit la seconde borne d'empilement d'éléments de batterie est fixée à cette plaque de connexion (61, 62).

10. Module de batterie (100) selon l'une quelconque des revendications 1 à 9, dans lequel au moins l'un des ressorts à lames (90, 90', 90ᵢ, 90₁₁, 90₁₂, 90₁₃) est formé sous forme de plaque (92) essentiellement plane ou de disque essentiellement plan avec au moins une indentation (94, 941, 942, 943, 944).

11. Module de batterie (100) selon l'une quelconque des revendications 1 à 10, dans lequel au moins l'un des ressorts à lames (90, 90', 90ᵢ, 90₁₁, 90₁₂, 90₁₃) est constitué d'aluminium ou de cuivre.

12. Bloc-batterie comportant un ou plusieurs modules de batterie (100) selon l'une quelconque des revendications 1 à 11.

13. Bloc-batterie selon la revendication 12,
comportant en outre un circuit de mesure de tension ;
dans lequel le circuit de mesure de tension comporte au moins une ligne électrique ; et
dans lequel au moins l'un des ressorts à lames (90, 90', 90ᵢ, 90₁₁, 90₁₂, 90₁₃) est connecté électriquement à une ligne électrique.

14. Véhicule comportant au moins un module de batterie (100) selon l'une quelconque des revendications 1 à 11 et/ou au moins un système de batterie selon la revendication 12 ou 13.

15. Procédé d'assemblage d'un module de batterie (100) selon l'une quelconque des revendications 1 à 11, le procédé comportant les étapes suivantes :
a) la fourniture d'une pluralité d'éléments de batterie (10, 10ᵢ, 10ᵢ₊₁, 10₁₁, ..., 10₄₃), chacun des éléments de batterie comportant un boîtier (10a) de forme parallélépipédique avec une paire de premiers côtés latéraux agencés opposés l'un à l'autre, une paire de seconds côtés latéraux agencés opposés l'un à l'autre et perpendiculaires à chacun des premiers côtés latéraux, un premier côté de borne (11) perpendiculaire à chacun des premiers côtés latéraux et à chacun des seconds côtés latéraux, et un second côté de borne (12) perpendiculaire à chacun des premiers côtés latéraux et à chacun des seconds côtés latéraux, le premier côté de borne (11) et le second côté de borne (12) agencés opposés l'un à l'autre, dans lequel chacun des premiers côtés latéraux présente une zone plus grande que la zone de chacun des seconds côtés latéraux et plus grande que chacun du premier côté de borne (11) et du second côté de borne (12), et chaque élément de batterie (10, 10ᵢ, 10ᵢ₊₁, 10₁₁, ..., 10₄₃), comportant une première borne (T₁, T₁,ᵢ₊₁, T_{1,11}, ..., T_{1,41}, T_{1,13}) agencée sur le premier côté de borne et une seconde borne (T₂, T_{2,i}, T_{2,42}) agencée sur le second côté de borne ;
b) le regroupement des éléments de batterie (10, 10ᵢ, 10ᵢ₊₁, 10₁₁, ..., 10₄₃) en une pluralité d'empilements d'éléments de batterie (110, 120, 130), chacun des empilements comportant une pluralité d'éléments de batterie agencés en rangée le long d'une direction d'empilement étant prédéfinie pour cet empilement, dans lequel dans chacun des empilements d'éléments de batterie (110, 120, 130), lorsqu'on regarde dans la direction d'empilement de cet empilement d'éléments de batterie, le second côté de borne de chaque élément de batterie, à l'exception du dernier élément de batterie, fait face au premier côté de borne d'un élément de batterie agencé ensuite ;
c) le placement, dans au moins dans un empilement d'éléments de batterie (110, 120, 130), au moins pour une paire d'un premier côté de borne et d'un second côté de borne avec le premier côté de borne de la paire orienté vers le second côté de borne de la paire, d'un ressort à lames (90, 90', 90ᵢ, 90₁₁, 90₁₂, 90₁₃) entre la première borne sur le premier côté de borne de la paire et la seconde borne sur le second côté de borne de la paire ;
d) le fait de presser chacun des empilements d'éléments de batterie (110, 120, 130) ensemble le long de leur direction d'empilement respective ;
f) le fait de fixer chacun des empilements d'éléments de batterie (110, 120, 130), tout en étant pressés ensemble selon l'étape d), dans le module de batterie (100).
